(19) Europäisches Patentamt / European Patent Office / Office européen des brevets

(11) **EP 3 308 211 B1**

(12) **EUROPEAN PATENT SPECIFICATION**

(45) Date of publication and mention of the grant of the patent:
**13.03.2019 Bulletin 2019/11**

(21) Application number: **16751335.7**

(22) Date of filing: **08.06.2016**

(51) Int Cl.:
*G02B 21/00* (2006.01)     *G02B 27/58* (2006.01)

(86) International application number:
**PCT/IB2016/053344**

(87) International publication number:
**WO 2016/199025 (15.12.2016 Gazette 2016/50)**

(54) **CONFOCAL MICROSCOPE AND RELATED PROCESS OF ACQUIRING AND PROCESSING IMAGES**

KONFOKALES MIKROSKOP UND ZUGEHÖRIGES VERFAHREN ZUR ERFASSUNG UND VERARBEITUNG VON BILDERN

MICROSCOPE CONFOCAL ET PROCESSUS ASSOCIÉ D'ACQUISITION ET DE TRAITEMENT D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.06.2015 IT UB20151104**

(43) Date of publication of application:
**18.04.2018 Bulletin 2018/16**

(73) Proprietors:
• **Crestoptics S.p.A.**
  **00167 Rome (IT)**
• **Consiglio Nazionale Delle Ricerche**
  **00185 Roma (IT)**

(72) Inventors:
• **VITULANO, Domenico**
  **00185 Rome (IT)**
• **BRUNI, Vittoria**
  **00185 Rome (IT)**

• **RICCO, Vincenzo**
  **00167 Rome (IT)**
• **SANTINELLI, Andrea**
  **00167 Rome (IT)**

(74) Representative: **Scilletta, Andrea**
  **IP Sextant s.r.l.**
  **Via Antonio Salandra, 18**
  **00187 Roma (IT)**

(56) References cited:
**EP-A1- 2 520 965     WO-A2-2013/144891
DE-A1- 19 824 460     DE-A1-102013 017 124**

• **QINGCHUAN TAO ET AL: "<title>A robust blind deconvolution based on estimation of point spread function parameters</title>", MEDICAL IMAGING 2002: PACS AND INTEGRATED MEDICAL INFORMATION SYSTEMS: DESIGN AND EVALUATION, vol. 5637, 8 February 2005 (2005-02-08), pages 581-589, XP055249715, ISSN: 0277-786X, DOI: 10.1117/12.577481**

**Description**

The present invention concerns a confocal microscope, and the related process of acquiring and processing images, that allows in a simple, efficient, reliable, and inexpensive way to increase the resolution of the acquired images.

It is known that confocal microscopy, initially disclosed in document US 3013467 A, uses an image processing to create a virtual section or plane, several micrometers deep, inside a sample, of which it also permits to reconstruct three-dimensional virtual images. In particular, confocal microscopy is applied for examinations of samples of thick human or animal tissues and for *in vivo* studies.

In the last decades, many researches aimed at increasing the resolution in confocal microscopy have been conducted, which have produced several methods based on principles and technologies very different from each other.

One of the main problems limiting both lateral and axial resolution in an optical microscope is diffraction, that is unavoidable in any optical system. Recently some methods overcoming the limits imposed by diffraction have been proposed.

By way of example, S.W. Hell et al., in "Breaking the diffraction resolution limit by stimulated emission: Stimulated-emission-depletion fluorescence microscopy", Optics Letters Vol. 19, No.11, pp. 780-782, (1994*),* have proposed a method based on the STimulated Emission Depletion (STED) leading to an increase of the resolution by 4,5 (with respect to the classical one), inhibiting fluorescence outside the area of interest centred on the Point Spread Function, also known as PSF. E. Betzig et al. in "Imaging intracellular fluorescent proteins at nanometer resolution", Science (2006) Vol. 313(5793), pp. 1642-1645*,* have proposed a method oriented to single-molecule localization and exploiting the PhotoActivated Localization Microscopy (PALM). M.J. Rust et al., in "Sub-diffraction-limit imaging by stochastic optical reconstruction microscopy (STORM)", Nature Methods (2006), 3(10):793-795*,* have proposed a method based on the Stochastic Optical Reconstruction Microscopy.

However, such methods have the constraint of having to use fluorescent labels (e.g. fluorophores), or high or in any case specific intensities of excitation.

In order to solve such problems, several alternative methods have been proposed, for instance by M.G.L. Gustafsson et al. in "I5M: 3D widefield light microscopy with better than 100 nm axial resolution", J. Microsc. (1999) Vol. 195, Pt 1, pp. 10-16, by M.G.L. Gustafsson in "Surpassing the lateral resolution limit by a factor of two using structured illumination microscopy", J. Microsc. (2000) Vol. 198, Pt 2, pp. 82-87, by C.B. Müller et al. in "Image scanning microscopy", Phys. Rev. Lett. (2010) 104(19):198101*,* and by A.G. York et al. in "Resolution doubling in live, multicellular organisms via multifocal structured illumination microscopy", Nature Methods (2012) Vol. 9, No. 7 pp. 749-754. Although they have performance comparable to (or slightly lower than) the aforementioned methods, such alternative methods have the great advantage to be capable to be applied to any type of fluorescent sample at the same time using any wavelength during excitation and emission.

However, they also continue to have some drawbacks, substantially deriving from the technical complexity of their implementation. For instance, the approach disclosed by Gustafsson in "Surpassing the lateral resolution limit by a factor of two using structured illumination microscopy*"* uses structured illumination, that entails a certain technical complexity with consequent costs of the instruments implementing the same, as well as specific problems of aberration.

In general, the most used prior art techniques are thus based on simple, yet effective, variants of classical confocal microscopy systems, since these are easily implementable via software and/or hardware and, hence, they entail low manufacturing ad marketing costs. In particular, the most widely used techniques either directly or indirectly involve specific variants of spinning disks having single stenopeic holes, also known as pinholes, and patterns of pinholes.

A first technique is disclosed by T. Shimozawa et al. in "Improving spinning disk confocal microscopy by preventing pinhole cross-talk for intravital imaging", Proceedings of the National Academy of Sciences of the United States of America, Vol. 110, no. 9, pp. 3399-3404, 2013, and it is based on the suppression of the background noise two to the so-called "pinhole cross-talk", that consists in eliminating the radiation emitted by out of focus planes excited by pinholes adjacent to the pinhole under examination. Such technique consists in increasing the distance between adjacent pinholes, at the expense, however, of a reduction of the emitted signal and hence of the of the resulting signal to noise ratio, also known as SNR.

Another technique for increasing resolution is the one proposed by N.A. Hosny et al. in "Correction: Super-Resolution Imaging Strategies for Cell Biologists Using a Spinning Disk Microscope", PLoS ONE 8(12), 2013, that consists in combining a spinning disk with very thin pinholes with fluorescent probes which have the property of individually randomly turning on or off with an activation through sample excitation.

Olaf Schulz et al. in "Resolution doubling in fluorescence microscopy with confocal spinning-disk image scanning microscopy", Proceedings of the National Academy of Sciences of the United States of America, Vol. 110, no. 52, pp. 21000-21005, 2013, have proposed a further technique using a stroboscopic light source within a normal confocal microscope for an increase (equal to about twice) of the resolution of the acquired image. In particular, starting from the teachings disclosed by C.J.R. Sheppard in "Super-resolution in confocal imaging", Optik (Stuttgart) 1988, 80 No. 2, pp. 53-54*,* who uses a structured illumination and a subsequent deconvolution of the resulting signal at the expense of a slow execution (in each laser pointing position, one image at a time has to be acquired), Olaf Schulz et al. have proposed to increase the resolution by about twice with respect to a common confocal microscope with a higher speed of execution combining such teachings with the aforementioned ones from York et al., i.e., with the use of multifocal source. In particular, the synchronised combination of a light source emitting a number of light pulses with the spinning disk rotating accordingly, permits to have a number of sample images which, if suitably combined, lead to a resolution increase. Finally, a Fourier reweighting operation as disclosed in the aforementioned article by Müller et al. is carried out, that consists in differently weighting low and high frequencies and that as a matter of fact attempts to substitute a (more expensive but also more powerful) classical deconvolution algorithm.

All these techniques are rather complex and have low performance.

O. Hollricher et al. in "High resolution optical confocal microscopy", Confocal Raman Microscopy, Chapter 1, Springer-Verlag Berlin Heidelberg 2011, and Y. Wang et al. in "Image subtraction method for improving lateral resolution and SNR in confocal microscopy", Optics and Laser Technology, vol. 48, 2013, pp. 489-494, disclose a series of other techniques for increasing the (lateral and axial) resolution and the signal to noise ratio in confocal microscopy, which techniques belong to the family of *subtractive imaging* methods. Such methods are based on the use of two pinholes of different size (simulating the axial direction shift) for the acquisition of the images and their subsequent subtraction. Although these methods permit a moderate increase of the spatial resolution, the produced image is suffering from noise. In this regard, the method proposed by Wang et al. attemts to overcome the limits of *subtractive imaging* by correcting the image $I_1$, acquired using the pinhole of smallest size, with a fraction of the difference between the image $I_2$, acquired using a pinhole of larger size, and $I_1$. Such process is based on the consideration that $I_1$ substantially contains in-focus light, while $I_2$ substantially contains out-of-focus light and a minor part of in-focus light; hence, by correcting $I_1$ with the suitably weighted amount ($I_2 - I_1$), an image with higher resolution and high SNR is obtained. The weight to be attributed to the correction is empirically estimated but it depends on the pinhole size. In order to increase the resolution of the image and at the same time to have a high SNR, the ratio between the size of the two pinhole must be at least equal to 3.

The method proposed by R. Heintzmann et al. in "Resolution enhancement by subtraction of confocal signals taken at different pinhole sizes", Micron, vol. 34, 2003, pp. 293-300, is very similar to the one of the aforementioned article by Wang et al., but the acquired images are normalised and recorded before being subtracted. In particular, normalisation is based on the following criterion: the intensity of $I_2$ (acquired image with pinhole of larger size) is scaled to half the intensity of $I_1$ (acquired image with pinhole of lower size). Instead, recording is carried out through a method based on the image cross-correlation. Even in this case, the final result depends on the value of the weight to be attributed to the correction and it is empirically estimated.

A drawback of the *subtracting imaging* methods is due to the fact that the subtraction implies the loss of information at the centre of the excitation spot, being limited only to the information deriving from the periphery of the excitation spot. Hence, the fact of having an image with relatively low SNR derived from the use of the same illumination beam in the acquisition of both images.

In order to obviate such drawback, a possible solution has been identified by C. Kuang et al. in "Breaking the diffraction barrier using fluorescence emission difference microscopy", Scientific Reports, 2013, 3:1441, by acquiring at least one of the two images in a non classical way. In such method, called Fluorescence Emission Difference (FED), that also belongs to the family of the *subtracting imaging* methods, the classical illumination beam of the confocal microscopy is used for one of the two images, while a differently modulated beam is used for the other one. In this second acquisition, the illumination pattern has the shape of a donut and the acquired image represents a sort of negative of the image of the classical confocal microscopy. The linear combination of the thus acquired two images produces an image with higher resolution.

However, although the quality of the obtained images is higher than the ones obtained with the classical *subtracting imaging,* even in this case the optimal coefficients to use in the linear combination of the two images must be empirically selected.

M. Martinez-Corral et al. in "Optical sectioning by two-pinhole confocal fluorescence microscopy", Micron, vol. 34, 2003, pp. 313-318, have proposed a method that differently constructs the acquisition device so as to divide fluorescent light beam in two parts, which are acquired in parallel by two detectors with different pinholes. The final image is still obtained by weighted subtraction of the two acquired images with weights to be empirically determined. Even in this cass one of the two images corresponds to a classical confocal microscopy, on the contrary the other one is acquired by inserting a sort of pupil mask, that, in a sense, modifies the nature of the fluorescent beam, physically implementing what simulated in the FED.

Finally, in the prior art three further methods have been proposed by documents US 2002/0146784 A1, US 2005/0146784 A1 and EP 2520965 A1.

In particular, documents US 2002/0146784 A1 and US 2005/0146784 are aimed at facilitating the acquisition in specific cases of interest in biology and they consider the situation wherein the grids through which a light beam must pass to produce the excitation beam form pinhole arrays. Apertures of different sizes (pinholes with two or more different sizes) are present, one for the excitation beam incident on a sample and the other one for the beam emitted by the sample. Such grids may be fixed or mobile in the plane in focus. In a further configuration, the two grids may be crossed by two light beams, i.e. an incoming light beam and a targeting light beam, also with different wavelengths, wherein the first beam serves to identify an area of interest and the other beam serves for an accurate examination thereof.

Even such solutions are complex and have not sufficiently high performance.

Document EP 2520965 A1 mechanically simulates in a confocal microscope the teachings disclosed in the aforementioned article by Müller et al., identifying a scanning of a sample through one light beam at a time. Such images (only representing a ROI, i.e. Region Of Interest, of the entire sample) are then combined to return the overall image. Such acquired images are treated in the Fourier domain through a particular filter oriented to resolution increase. Each one of these images is substantially obtained as the convoluzione of the sample image and of a PSF that depends on the microscope optics. If the sample image is acquired through one beam at a time, the resulting PSF consists of a new PSF with a double resolution of the PSF that would be obtained without the acquisition through one beam (or one ROI) at a time. In order to speed up the acquisition process, a multibeam solution is also suggested that maintains the characteristics of isolated ROI for each one of the acquired regions.

The solution proposed by document EP 2520965 A1 suffers from the drawback that both the initial PSF and the excitation intensity distribution must be known in advance. Also, since it is necessary a double resolution with respect to the resolution of the actually acquired data in order to apply the method, the acquired data must be necessarily interpolated through a classical interpolation method that does not adapt to the analysed image.

In this context, the solution proposed according to the present invention is introduced, allowing to solve the aforementioned problems of the prior art solutions.

Therefore, it is an object of the present invention to to increase the resolution of the images acquired according the confocal microscopy technique in a simple, efficient, reliable, and inexpensive way.

It is specific subject matter of the present invention a process of acquiring and processing images in confocal microscopy, comprising the following steps:

A. acquiring, by means of a sensor of image acquisition having its own resolution $R \times R$, a first overall image $A_{k-1}$ of an entire plane of a sample scanning the same with a first excitation light beam, obtained by making a basic light beam pass through one or more first pinholes having a shape and a first size and transmitted to an optics of a confocal microscope that is focused on said plane of the sample and that has a PSF, and acquiring a second overall image $A_k$ of the entire plane of the sample scanning the same with a second excitation light beam, obtained by making said basic light beam pass through one or more second pinholes having a shape equal to the shape of said one or more first pinholes and a second size larger than the first size, wherein said one or more first pinholes and said one or more second pinholes are arranged in a plane optically conjugated to said plane of the sample;

B. calculating an estimate $g$ of the PSF of the optics of the microscope, through an inverse Fourier transform of the Fourier transform $\hat{g}$ calculated as follows:

$$\hat{g}(\omega) = \frac{\hat{A}_{k-1}^{*}(\omega)\hat{A}_k(\omega)}{\left|\hat{A}_{k-1}(\omega)\right|^2}$$

where $\hat{A}_{k-1}(\omega)$ is the Fourier transform of the acquired first overall image $A_{k-1}$ and $\hat{A}_k(\omega)$ is the Fourier transform of the acquired second overall image $A_k$; and

C. deconvolving the acquired second overall image $A_k$ using the estimate $g$ of the PSF of the optics of the microscope through a main deconvolution algorithm, obtaining the resulting image $I$ of the entire plane of the sample:

$$I = A_k \bullet g$$

(where the symbol "●" is used to represent the deconvolution).

According to another aspect of the invention, step A may perform a suppression of aliasing phenomena in the acquired first overall image $A_{k-1}$ and in the acquired second overall image $A_k$.

According to a further aspect of the invention, the shape of said one or more first pinholes and of said one or more second pinholes may be a parallelogram, optionally a rectangular parallelogram, wherein each one of said one or more first pinholes has sides $L_{a1}$ and $L_{b1}$ and each one of said one or more second pinholes has sides $L_{a2}$ and $L_{b2}$, dimensional ratios $(L_{a2}/L_{a1})$ and $(L_{b2}/L_{b1})$ between homologous sides being identical and larger than 1, whereby

$$(L_{a2}/L_{a1}) = (L_{b2}/L_{b1}) > 1$$

optionally equal to a power of 2, whereby

$$(L_{a2}/L_{a1}) = (L_{b2}/L_{b1}) = 2^n \text{, with } n > 1$$

more optionally equal to 2, whereby

$$(L_{a2}/L_{a1}) = (L_{b2}/L_{b1}) = 2.$$

According to an additional aspect of the invention, said one or more first pinholes may be at least two and said one or more second pinholes may be at least two, and:

- at least two first pinholes may be spaced apart from each other along a direction parallel to a first side $L_{a1}$ by a first distance $D_{a1}$ and at least two second pinholes may be spaced apart from each other along a direction parallel to a first side $L_{a2}$, homologous to the first side $L_{a1}$ of said first pinholes, by a second distance $D_{a2}$, the dimensional ratio $(D_{a2}/D_{a1})$ between the second and the first distances being identical to the dimensional ratios $(L_{a2}/L_{a1})$ and $(L_{b2}/L_{b1})$ between homologous sides, whereby

$$(D_{a2}/D_{a1}) = (L_{a2}/L_{a1}) = (L_{b2}/L_{b1}) > 1,$$

  wherein the first distance $D_{a1}$ is optionally equal to a first integer multiple j of the first side $L_{a1}$ of said first pinholes, whereby $D_{a1} = j \cdot L_{a1}$, with j equal to an integer larger than or equal to 1, whereby the second distance $D_{a2}$ is equal to the first integer multiple j of the first side $L_{a2}$ of said second pinholes, i.e. $D_{a2} = j \cdot L_{a2}$, and/or
- at least two first pinholes may be spaced apart from each other along a direction parallel to a second side $L_{b1}$ by a third distance $D_{b1}$ and at least two second pinholes may be spaced apart from each other along a direction parallel to a second side $L_{b2}$, homologous to the second side $L_{b1}$ of said first pinholes, by a fourth distance $D_{b2}$, the dimensional ratio $(D_{b2}/D_{b1})$ between the fourth and the third distances being identical to the dimensional ratios $(L_{a2}/L_{a1})$ and $(L_{b2}/L_{b1})$ between homologous sides, whereby

$$(D_{b2}/D_{b1}) = (L_{a2}/L_{a1}) = (L_{b2}/L_{b1}) > 1,$$

  wherein the third distance $D_{b1}$ is optionally equal to a second integer multiple k of the second side $L_{b1}$ of said first pinholes, whereby $D_{b1} = k \cdot L_{b1}$, with k equal to an integer larger than or equal to 1, whereby the fourth distance $D_{b2}$ is equal to the second integer multiple k of the second side $L_{b2}$ of said second pinholes, i.e. $D_{b2} = k \cdot L_{b2}$.

According to another aspect of the invention, in the acquiring step A, during scanning of the entire plane of the sample with the first excitation light beam, said one or more first pinholes may be translated in their own plane along at least one of two directions, which are optionally parallel to two sides of the shape of said first pinholes, and, during scanning of the entire plane of the sample with the second excitation light beam, said one or more second pinholes may be translated in their own plane along at least one of two directions, which are optionally parallel to two sides of the shape of said second pinholes.

According to a further aspect of the invention, the shape of said one or more first pinholes may be a square of side $L_1$ and the shape of said one or more second pinholes may be a square of side $L_2$, wherein the dimensional ratio $(L_2/L_1)$ between the sides of the first and second pinholes is equal to 2, whereby

$$(L_2/L_1) = 2,$$

said one or more first pinholes being a plurality of first pinholes arranged in an array and spaced apart from one another by a distance $D_1$ equal to twice their side $L_1$, whereby

$$D_1 = 2 \cdot L_1,$$

said one or more second pinholes being a plurality of second pinholes arranged in an array and spaced apart from one another by a distance $D_2$ equal to twice their side $L_2$, whereby

$$D_2 = 2 \cdot L_2 = 4 \cdot L_1,$$

wherein, in the acquiring step A, during scanning of the entire plane of the sample with the first excitation light beam, the plurality of first pinholes is translated in the plane of said first pinholes along at least one of two orthogonal directions which are parallel to the sides of said first pinholes, and, during scanning of the entire plane of the sample with the second excitation light beam, the plurality of second pinholes is translated in the plane of said second pinholes along at least one of two orthogonal directions which are parallel to the sides of said second pinholes.

According to an additional aspect of the invention, in the deconvolving step C, the main deconvolution algorithm may be a deconvolution operation or an iterative deconvolution algorithm using the estimate $g$ of the PSF of the optics of the microscope as initial guess of such PSF.

According to another aspect of the invention, step B of calculating the estimate $g$ of the PSF of the optics of the microscope may comprise the following sub-steps:

B.1 calculating the Fourier transform through a fast Fourier transform, aka FFT, of the acquired first overall image $A_{k-1}$:

$$\hat{A}_{k-1}(\omega) = FFT(A_{k-1})$$

B.2 calculating the Fourier transform through a FFT of the acquired second overall image $A_k$:

$$\hat{A}_k(\omega) = FFT(A_k)$$

B.3 calculating the Fourier transform $\hat{g}(\omega)$ of the estimate $g$ of the PSF of the optics of the microscope on the basis of the FFT values obtained in sub-steps B.1 and B.2, as follows:

$$\hat{g}(\omega) = \frac{\hat{A}_{k-1}^{*}(\omega)\hat{A}_k(\omega)}{\left|\hat{A}_{k-1}(\omega)\right|^2}$$

B.4 calculating the estimate $g$ of the PSF of the optics of the microscope through an inverse Fourier transform performed through an inverse fast Fourier transform, aka IFFT, of the Fourier transform $\hat{g}(\omega)$ calculated in sub-step B.3:

$$g = IFFT(\hat{g}(\omega))$$

According to a further aspect of the invention, the acquiring step A may comprise the following sub-steps:

A.1 acquiring N first partial images $A_{k-1}^{(p)}$, with $p$ ranging from 1 to N, of said plane of the sample through said one or more first pinholes;

A.2 adding all the N first partial images $A_{k-1}^{(p)}$ to obtain the acquired first overall image $A_{k-1}$:

$$A_{k-1} = \sum_{p=1}^{N} A_{k-1}^{(p)} ;$$

A.3 acquiring M second partial images $A_k^{(q)}$, with $q$ ranging from 1 to M, of said plane of the sample through said one or more second pinholes;

A.4 adding all the M second partial images $A_k^{(q)}$ to obtain the acquired second overall image $A_k$:

$$A_k = \sum_{q=1}^M A_k^{(q)}.$$

According to an additional aspect of the invention, the acquiring step A may further comprise the following additional sub-steps:

- after sub-step A.1 and before sub-step A.2:

    A.5 calculating an estimate of a size $O_S \times O_S$ of a first median filter $\Omega_S$ applied by the sensor through the following formula:

$$O_s = \left\lceil \frac{\bar{p}R}{L_1} \right\rceil$$

    wherein operator [h] returns rounding up to upper end of h, and wherein

$$\bar{p} = argmin_{p \in \mathbb{N}}\{(pR - L_1) > 0\}$$

    where $\mathbb{N}$ is the set of natural numbers;

    A.6 deconvolving each one of the N acquired first partial images $A_{k-1}^{(p)}$ using the estimate of the first median filter $\Omega_S$ of size $O_S \times O_S$ obtained in sub-step A.5, through a preliminary deconvolution algorithm, obtaining the corresponding corrected partial image $A_{k-1\_corrected}^{(p)}$:

$$A_{k-1\_corrected}^{(p)} = A_{k-1}^{(p)} \bullet \Omega_S$$

    and replacing each acquired first partial image $A_{k-1}^{(p)}$ with the corresponding corrected partial image $A_{k-1\_corrected}^{(p)}$ resulting from the deconvolution, whereby sub-step A.2 adds all the N corrected first partial images $A_{k-1\_corrected}^{(p)}$ to obtain the acquired first overall image $A_{k-1}$, as follows:

$$A_{k-1} = \sum_{p=1}^N A_{k-1\_corrected}^{(p)} \, ;$$

- after sub-step A.3 and before sub-step A.4:

    A.7 calculating an estimate of a size $O_t \times O_t$ of a second median filter $\Omega_t$ applied by the sensor through the following formula:

$$O_t = \left\lceil \frac{\bar{q}R}{L_2} \right\rceil$$

    wherein

$$\bar{q} = argmin_{q \in \mathbb{N}}\{(qR - L_2) > 0\} ;$$

A.8 deconvolving each one of the M acquired second partial images $A_k^{(q)}$ using the estimate of the second median filter $\Omega_t$ of size $O_t \times O_t$ obtained in sub-step A.7, through the preliminary deconvolution algorithm obtaining the corresponding corrected partial image $A_{k\_corrected}^{(q)}$:

$$A_{k\_corrected}^{(q)} = A_k^{(q)} \bullet \Omega_t$$

and replacing each acquired second partial image $A_k^{(q)}$ with the corresponding corrected partial image $A_{k\_corrected}^{(q)}$ resulting from the deconvolution, whereby sub-step A.4 adds all the M corrected second partial images $A_{k\_corrected}^{(q)}$ to obtain the acquired second overall image $A_k$, as follows:

$$A_k = \sum_{q=1}^{M} A_{k\_corrected}^{(q)} ,$$

whereby step A compensates a convolving effect of a resolution of the sensor and of the size of said one or more first pinholes and of said one or more second pinholes.

According to another aspect of the invention, in the deconvolving step C, the preliminary deconvolution algorithm may be a deconvolution operation or an iterative deconvolution algorithm using the estimate of the first median filter $\Omega_s$ obtained in sub-step A.5 or the estimate of the second median filter $\Omega_t$ obtained in sub-step A.7 as initial guess of such first or second median filter $\Omega_s$ or $\Omega_t$.

It is further specific subject matter of the present invention a confocal microscope, comprising:

- a light source configured to illuminate with a basic light beam at least one mask to obtain an excitation light beam, the mask being provided with a first sector, having one or more first pinholes having a shape and a first size, configured to obtain a first excitation light beam, and with a second sector, having one or more second pinholes having a shape equal to the shape of said one or more first pinholes and a second size larger than the first size, configured to obtain a second excitation light beam,
- moving means configured to move said at least one mask on a plane of said at least one mask that is optically conjugated to a plane of a sample,
- an optics focused on said plane of the sample,
- an image acquiring sensor, having its own resolution $R \times R$, configured to sense in widefield a fluorescent beam emitted by said plane of the sample, and
- a processing central unit configured to control the operation of the confocal microscope and to execute the previously described process of acquiring and processing images in confocal microscopy.

According to another aspect of the invention, the shape of said one or more first pinholes and of said one or more second pinholes may be a parallelogram, optionally a rectangular parallelogram, more optionally a square, wherein each one of said one or more first pinholes has sides $L_{a1}$ and $L_{b1}$ and each one of said one or more second pinholes has sides $L_{a2}$ and $L_{b2}$, dimensional ratios $(L_{a2}/L_{a1})$ and $(L_{b2}/L_{b1})$ between homologous sides being identical and larger than 1, whereby

$$(L_{a2}/L_{a1}) = (L_{b2}/L_{b1}) > 1$$

optionally equal to a power of 2, whereby

$$(L_{a2}/L_{a1}) = (L_{b2}/L_{b1}) = 2^n , \text{ with } n > 1$$

more optionally equal to 2, whereby

$$(L_{a2}/L_{a1}) = (L_{b2}/L_{b1}) = 2,$$

wherein said moving means is configured to translate said at least one mask on its own plane along at least one of two directions, which are optionally parallel to two sides of the shape of said first pinholes and/or parallel to two sides of the shape of said second pinholes,
wherein optionally:

- said one or more first pinholes comprise at least two first pinholes which are spaced apart from each other along a direction parallel to a first side $L_{a1}$ by a first distance $D_{a1}$ and said one or more second pinholes comprise at least two second pinholes which are spaced apart from each other along a direction parallel to a first side $L_{a2}$, homologous to the first side $L_{a1}$ of said first pinholes, by a second distance $D_{a2}$, the dimensional ratio $(D_{a2}/D_{a1})$ between the second and first distances being identical to the dimensional ratios $(L_{a2}/L_{a1})$ and $(L_{b2}/L_{b1})$ between homologous sides, whereby

$$(D_{a2}/D_{a1}) = (L_{a2}/L_{a1}) = (L_{b2}/L_{b1}) > 1,$$

wherein the first distance $D_{a1}$ is more optionally equal to a first integer multiple j of the first side $L_{a1}$ of said first pinholes, whereby $D_{a1} = j \cdot L_{a1}$, with j equal to an integer larger than or equal to 1, whereby the second distance $D_{a2}$ is equal to the first integer multiple j of the first side $L_{a2}$ of said second pinholes, i.e. $D_{a2} = j \cdot L_{a2}$, and/or
- said one or more first pinholes comprise at least two first pinholes which are spaced apart from each other along a direction parallel to a second side $L_{b1}$ by a third distance $D_{b1}$ and said one or more second pinholes comprise at least two second pinholes which are spaced apart from each other along a direction parallel to a second side $L_{b2}$, homologous to the second side $L_{b1}$ of said first pinholes, by a fourth distance $D_{b2}$, the dimensional ratio $(D_{b2}/D_{b1})$ between the fourth and third distances being identical to the dimensional ratios $(L_{a2}/L_{a1})$ and $(L_{b2}/L_{b1})$ between homologous sides, whereby

$$(D_{b2}/D_{b1}) = (L_{a2}/L_{a1}) = (L_{b2}/L_{b1}) > 1,$$

wherein the third distance $D_{b1}$ is more optionally equal to a second integer multiple k of the second side $L_{b1}$ of said first pinholes, whereby $D_{b1} = k \cdot Lb_1$, with k equal to an integer larger than or equal to 1, whereby the fourth distance $D_{b2}$ is equal to the second integer multiple k of the second side $L_{b2}$ of said second pinholes, i.e. $D_{b2} = k \cdot L_{b2}$.

According to a further aspect of the invention, the first sector and the second sector may be part of only one mask, wherein:

- the mask is rectangular and said moving means is configured to translate the mask so as to position a sector selected between the first sector and the second sector in a position in which it is configured to be illuminated by the basic light beam so as to produce an excitation light beam selected between the first excitation light beam and the second excitation light beam, or
- the mask is circular and said moving means is configured to rotate the mask so as to position a sector selected between the first sector and the second sector in a position in which it is configured to be illuminated by the basic light beam so as to produce an excitation light beam selected between the first excitation light beam and the second excitation light beam.

According to an additional aspect of the invention, the confocal microscope may further comprise a relay lens, positioned along an optical path of the first and of the second excitation light beam and configured to select said plane of the sample that is optically conjugated to said plane of said at least one mask.
The invention is based on a technology for increasing the resolution of the images acquired by a confocal microscope through pinholes (stenopeic holes) of different size, in particular with two types of pinholes having respective different sizes, namely two types of pinholes having same shape and respective different sizes. The excitation beam in the confocal microscope is obtained by making a basic light beam pass through (at least) one pinhole having the first size, whereby through a scanning of the whole area of the sample it is possible to obtain a first image; the same process repeats in a subsequent point in time through (at least) one pinhole of different size, thus obtaining a second image.

Through a suitable mathematical processing of the two obtained images it is possible to automatically and precisely estimate the point spread function or PSF related to the optics of the microscope that, in combination with a deconvolution process, permits to increase the resolution of the resulting image.

The advantaged offered by the invention are numerous and significant, as demonstrated by the experiments conducted by the inventors.

First of all, the confocal microscope and the related process of acquiring and processing images according to the invention permit an increase of resolution, offering at the same time the possibility to use any light, i.e. with any frequency in emission/reception, and any light beam, in terms of absolute intensity and modulation thereof, as well as the possibility to act on any sample withouth any particular requirements on the type of the used fluorescent fluid (e.g. markers, labels, etc.).

Also, the invention does not require any substantial modification of the conventional mechanics of the microscope.

Furthermore, in processing the automatic estimate of the PSF of the optics, the invention does not require auxiliary parameters nor interpolation operations on the data.

Moreover, the use of two different types of pinholes (having same shape and different sizes), through which the basic light beam passes to obtain respective excitation beams, does not reduce the quality of the acquisition at the centre of the pinhole, whereby it does not entail any reduction of the SNR at the centre of the pinhole. In other words, differently from the *subtractive imaging* methods, the invention permits to process the acquired images without loss of information at the centre of the pinhole, allowing an automatic setting of the parameters.

The present invention will be now described, by way of illustration and not by way of limitation, according to its preferred embodiments, by particularly referring to the Figures of the annexed drawings, in which:

Figure 1 schematically shows a preferred embodiment of the confocal microscope according to the invention;
Figure 2 schematically shows a mask of the confocal microscope of Figure 1;
Figure 3 schematically shows a particular of a further embodiment of the confocal microscope according to the invention;
Figure 4 schematically shows a mask of another embodiment of the confocal microscope according to the invention;
Figure 5 shows a first embodiment of the process of acquiring and processing according to the invention; and
Figure 6 shows a second embodiment of the process of acquiring and processing according to the invention.

In the Figures identical reference numerals will be used for alike elements.

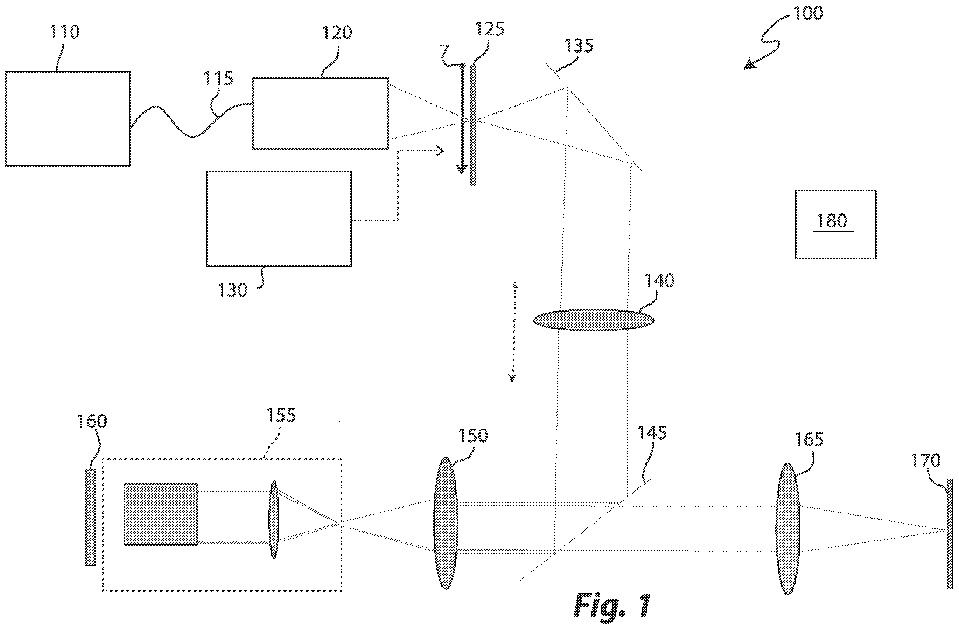

Figure 1 schematically shows a preferred embodiment of the confocal microscope according to the invention, generally indicated with the reference numeral 100. It may be observed that the confocal microscope 100 comprises a LED or laser light source 110 that, through an optical fibre 115, sends a basic light beam to an optical assembly 120, comprising one or more lenses, that illuminates a mask 125 provided with two sectors, each one having one or more, advantageously at least two, pinholes, so as to obtain an excitation light beam comprising one or more point beams corresponding to said one or more pinholes. The characteristics of the mask 125 are described later.

In order to acquire an image of a sample, it is necessary to scan the sample by moving the mask 125, through an automated moving assembly 130, e.g. comprising piezoelectric devices and/or other motorized devices, that moves a support (not shown in the Figures) housing the mask 125; the support may be considered as being part, along with the automated assembly 130, of moving means for moving the mask 125. In particular, as it will be illustrated in detail later, the mask 125 may be rectangular and is housed on a rectangular support, the automated assembly 130 being configured to translate the rectangular support in the x-y plane of the same support (and hence to translate the mask 125 in the x-y plane of the same mask 125); alternatively, the mask 125 may be circular and is housed on a circular support, the automated assembly 130 being configured to translate and to rotate the circular support in the x-y plane of the same support.

The excitation light beam crossing the pinholes of the mask 125 is deflected by a first reflecting mirror 135 transmiting the same towards a first relay lens 140 (that, as known, is an optical assembly formed by one or more conventional lenses and/or by an achromatic optical device) that may be moved along the longitudinal axis z of the branch of the optical path of the light beam.

Once the first relay lens 140 has been crossed, the excitation light beam prosecutes up to a dichroic mirror 145 reflecting the same towards a second relay lens 150 that transmits the same to an optics 155 of the microscope 100 that is focused on a plane of a sample 160. In turn, the sample emits an emitted fluorescent beam that goes back towards the dichroic mirror 145 that let it pass until it crosses a third relay lens 165 and that is sensed by a sensor 170, optionally a CCD sensor or a sCMOS sensor. In this regard, sensing occurs in widefield, i.e. without the emitted fluorescent beam passing again through the mask 125.

The mask 125 is optically conjugated to the sample 160 to observe (i.e. it is arranged in a plane optically conjugated to the plane of the sample 160 to observe) by moving the first relay lens 140 along the longitudinal axis z.

The confocal microscope 100 finally comprises a processing central unit 180, optionally comprising a microprocessor, connected to the various components of the confocal microscope 100, in particular to the automated moving assembly 130, the first relay lens 140, the optics 155 and the sensor 170. The processing central unit 180 is configured to control the operation of the confocal microscope 100 and to execute the processing of the images acquired by the sensor 170.

The mask 125 is provided with two types of pinholes, with identical shape but different respective sizes. In particular, the shape of the pinholes may be a polygon or a circle (even if it must be noted that a circle is in any case "polygonalised" in the mechanical implementation of the pinhole), optionally a parallelogram (whereby the translations during each scanning of the sample 160 occur along two directions parallel to the parallelogram sides), more optionally a rectangular parallelogram or square (whereby the translations during each scanning of the sample 160 occur along two directions orthogonal to each other, since they are parallel to the sides of the rectangular parallelogram or square). The pinholes may be used either individually or as elements of a more complex pattern.

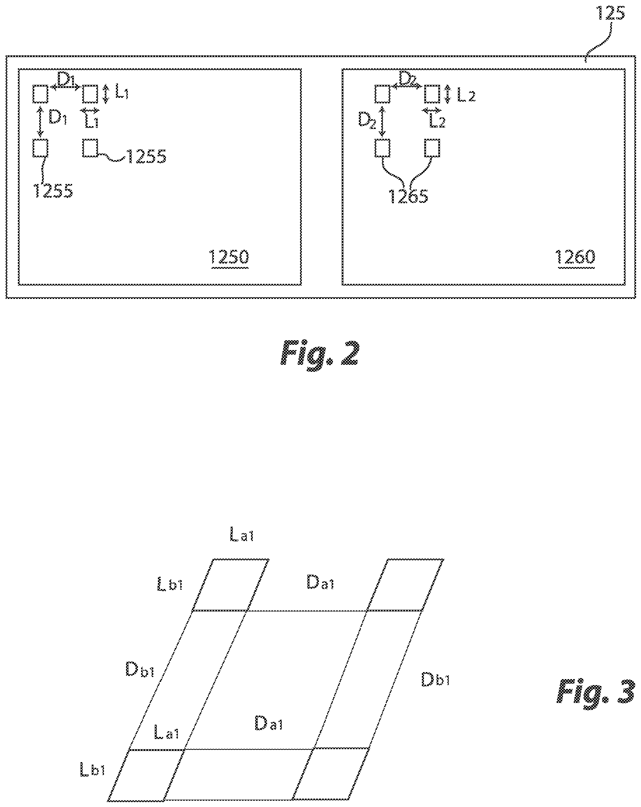

As shown in Figure 2, the mask 125 of the preferred embodiment of the confocal microscope 100 according to the invention has rectangular shape and comprises two rectangular sectors 1250 and 1260: the first sector 1250 is provided with four square pinholes 1255 having side $L_1$, arranged in an array (i.e. arranged at the vertices of a square) and spaced apart from one another by a distance $D_1$ equal to twice $L_1$ (whereby $D_1 = 2 \cdot L_1$); the second sector 1260 is provided with four square pinholes 1265 having side $L_2$ that is equal to twice $L_1$ (whereby $L_2 = 2 \cdot L_1$), arranged in an array (i.e. arranged at the vertices of a square) and spaced apart from one another by a distance $D_2$ equal to twice $L_2$ (whereby $D_2 = 2 \cdot L_2 = 4 \cdot L_1$). As described in detail later, the entire sample 160 (namely the entire plane of the sample 160 optically conjugated to the plane of the mask 124) is scanned a first time with the pinholes 1255 of the first sector 1250, and a second time with the pinholes 1265 of the second sector 1260. During the first or second scanning, the automated assembly 130 translates (the rectangular support housing) the mask 125 in the x-y plane of the support so that the pinholes 1255 of the first sector 1250 or the pinholes 1265 of the second sector 1260 entirely scan the (plane of the) sample 160. Obviously, the translations in the x-y plane of the support during each scanning of the (plane of the) sample 160, which occur along two orthogonal directions (i.e. along two directions parallel to the sides of the square pinholes), exploit the square shape of the pinholes and the distance from each other, equal to twice their side. Once the first scanning of the entire (plane of the) sample 160 with the pinholes 1255 of the first rectangular sector 1250 has terminated, the automated assembly 130 translates (the rectangular support housing) the mask 125 in the x-y plane of the support so as to execute the second scanning of the entire (plane of the) sample 160 with the pinholes 1265 of the second rectangular sector 1260. Alternatively, instead of a mask 125 with two sectors 1250 and 1260, further embodiments of the confocal microscope according to the invention may have two (or more) distinct masks each having exclusively square pinholes (1255 or 1265) of one size (i.e. of side $L_1$ or $L_2$); in this case, the two sectors 1250 and 1260 are part of two masks, in the sense that each one belongs to a respective one of two masks (whereby, in general, the two sectors 1250 and 1260 are part of at least one mask).

Other embodiments of the confocal microscope according to the invention may have masks 125 wherein the number of square pinholes in each sector may be any number even different from four, optionally larger than four.

In this regard, further embodiments of the confocal microscope according to the invention may have masks 125 wherein the square pinholes are spaced apart from each other by a distance equal to an integer multiple of their side; namely, $D_1 = j \cdot L_1$ and $D_2 = k \cdot L_2$, with j equal to an integer larger than or equal to 1, and k also equal to an integer larger than or equal to 1; in particular, in the caso where the number of pinholes is such that their total surface covers a quarter of the area of the (plane of the) sample 160 to scan, spaced apart from each other by a distance equal to the size of the side (whereby $D_1 = L_1$ and $D_2 = L_2$), in order to execute the scanning of the entire (plane of the) sample 160 it is sufficient to carry out four acquisitions: starting from an acquisition in a starting position, the other three acquisitions are carried out after that the automated assembly 130 has translated the mask 125 in the plane of the support by a space equal to the same side, respectively $L_1$ for the first sector and $L_2$ for the second sector, in only one of the two orthogonal directions parallel to the sides and in both the two orthogonal directions.

More in general, other embodiments of the confocal microscope according to the invention may have the square pinholes spaced apart from each other by any distance $D_1$ and $D_2$; in this case, adaptation of the acquired images processing, that is explained later, is immediate to those skilled in the art (in particular, it requires suppression of the aliasing phenomena).

Further embodiments of the confocal microscope according to the invention may have masks 125 wherein the dimensional ratio ($L_2/L_1$) between the side $L_2$ of the pinholes 1265 of the second sector 1260 and the side $L_1$ of the pinholes 1255 of the first sector 1250 is equal to a power of 2, whereby

$$L_2 = 2^n \cdot L_1 \text{ , with } n \geq 1$$

whereby the first sector 1250 and the second sector 1260 are part of dyadic grids of pinholes, respectively 1255 and 1266. This allows (most of all when $L_2 = 2 \cdot L_1$) to simplify the processing illustrated below, avoiding interpolation operations which are required when the ratio between the paces of the grids is not an integer and it is then necessary to operate at subpixel level (i.e. avoiding the required interpolations when operating at subpixel level).

Still other embodiments of the confocal microscope according to the invention may have masks 125 wherein the dimensional ratio $(L_2/L_1)$ between the side $L_2$ of the pinholes 1265 of the second sector 1260 and the side $L_1$ of the pinholes 1255 of the first sector 1250 is different from 2; in particular such dimensional ratio $(L_2/L_1)$ may be any value larger than 1:

$$(L_2/L_1) > 1$$

Even in this case, adaptation of the acquired images processing, that is explained later, is immediate to those skilled in the art (in particular, it requires an interpolation operation).

Further embodiments of the confocal microscope according to the invention may have the pinholes with parallelogram shape having sides $L_{a1}$ and $L_{b1}$ for the pinholes of the first sector and $L_{a2}$ and $L_{b2}$ for the pinholes of the second sector, as shown in Figure 3 with reference to the pinholes of the first sector; in particular, the shape of the parallelograms of the pinholes of the first and second sectors is the same (i.e. the angle between the sides $L_{a1}$ and $L_{b1}$ of the parallelograms of the first sector is equal to the angle between the sides $L_{a2}$ and $L_{b2}$ of the parallelograms of the second sector), and the dimensional ratio between homologous sides $(L_{a2}/L_{a1})$ and $(L_{b2}/L_{b1})$ of the pinholes of the second sector and of the pinholes of the first sector is the same and is generally larger than 1, whereby

$$(L_{a2}/L_{a1}) = (L_{b2}/L_{b1}) > 1$$

optionally equal to a power of 2, whereby

$$(L_{a2}/L_{a1}) = (L_{b2}/L_{b1}) = 2^n \text{ , with } n > 1$$

more optionally equal to 2, whereby

$$(L_{a2}/L_{a1}) = (L_{b2}/L_{b1}) = 2$$

In this case, the translations in the plane of the support during each scanning of the (plane of the) sample 160 occur along two directions parallel to the sides of the parallelograms, i.e. during the first scanning they occur along two directions parallel to $L_{a1}$ and $L_{b1}$, and during the second scanning they occur along two directions parallel to $L_{a2}$ and $L_{b2}$. The distance between the parallelogram pinholes, that in general may be any one, is advantageously equal to an integer multiple of the side oriented along the translation direction; namely, the distance $D_{a1}$ between the pinholes of the first sector along the direction parallel to the first side $L_{a1}$ is equal to $j \cdot L_{a1}$ (i.e. $D_{a1} = j \cdot L_{a1}$) and the distance $D_{b1}$ between the pinholes of the first sector along the direction parallel to the second side $L_{b1}$ is equal to $k \cdot L_{b1}$ (i.e. $D_{b1} = k \cdot L_{b1}$), with j equal to an integer larger than or equal to 1 and k also equal to an integer larger than or equal to 1, while the distance $D_{a2}$ between the pinholes of the second sector along the direction parallel to the first side $L_{a2}$ is equal to $j \cdot L_{a2}$ (i.e. $D_{a2} = j \cdot L_{a2}$) and the distance $D_{b2}$ between the pinholes of the second sector along the direction parallel to the second side $L_{b2}$ is equal to $k \cdot L_{b2}$ (i.e. $D_{b2} = k \cdot L_{b2}$).

In the case where at least one of the dimensional ratios between homologous sides $(L_{a2}/L_{a1})$ and $(L_{b2}/L_{b1})$ and at least one of the distances $D_{a1}$, $D_{b1}$ $D_{a2}$ and $D_{b2}$ is not equal to an integer multiple of the side oriented along the respective traslation direction, adaptation of the acquired images processing, that is explained later, is immediate to those skilled in the art (in particular, it requires suppression of the aliasing phenomena).

Moreover, further embodiments may also have the pinholes with any polygonal or circular shape, spaced apart from each other by any distance (provided that the distance between the pinholes of the first sector and the distance between the pinholes of the second sector have the same dimensional ratio that respective sizes of the pinholes of the first sector and of the second sector have). Even in this cases, adaptation of the acquired images processing, that is explained later, is immediate to those skilled in the art; in particular, it requires suppression of the aliasing phenomena to compensate possible overlapping due to multiple acquisitions of the same points of the (plane of the) sample 160 (and avoiding failure to acquire some areas of the plane of the sample 160).

Other embodiments of the confocal microscope according to the invention may have masks 125 wherein each one of the two sectors comprises a sole pinhole (of identical shape and different sizes); obviously, the more numerous are the pinholes of each sector, the faster the acquisition process.

Although the selection of the size of the pinholes is arbitrary, the dimensional ranges of the pinholes are the conventional ones, imposed by the acquisition optics and by the confocal microscopy technique, in particular taking account that the SNR is sufficient and that the pinhole size difference is appreciable in the resolution of the acquisition device (i.e., in the grid of the obtained image).

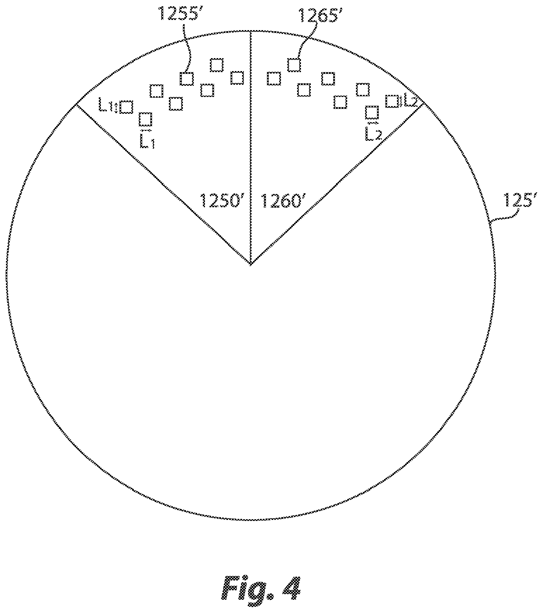

Alternatively to the rectangular mask, as the one shown in Figure 2, other embodiments of the confocal microscope according to the invention may have masks having shape different from the rectangular one, optionally a circular shape, as shown in Figure 4 wherein the mask 125' is a circular disk having (at least) two sectors 1250' and 1260', each one of which comprises (eight) square pinholes, respectively 1255' and 1265', having side $L_1$ and $L_2$, respectively, and having dimensional and distance relationships similar to those illustrated for the mask 125 of Figure 2. Even in this case, the automated assembly 130 is configured to translate (the support housing) the circular mask 125' in the x-y plane of the support during scanning of the entire (plane of the) sample 160, through the pinholes 1255' of the first sector 1250' or the pinholes 1265' of the second sector 1260', along two directions orthogonal to each other (parallel to the sides of the square pinholes 1255' or 1265'); in particular, it is immediate to verify that the pinholes 1255' of the first sector 1250' (as well as the pinholes 1265' of the second sector 1260') are arranged according to a pattern wherein the pinholes 1255' (and the pinholes 1265') are spaces apart from on another in horizontal direction by a distance equal to twice their side $L_1$, whereby $D_1 = 2 \cdot L_1$ (and similarly for the pinholes 1265', wherein $D_2 = 2 \cdot L_2$), while there are no pinholes 1255' (nor pinholes 1265') aligned along vertical direction. Differently, in order to change the sector of the circular mask 125' through which the basic light beam is caused to pass, the automated moving assembly 130 moves (the support housing) the mask 125' with a rotation movement in the x-y plane of the support. In particular, the circular mask 125' may comprise one or more (e.g. two) other sectors provided with square pinholes having side $L_1$ adjacent to the sector 1250', and one or more (e.g. two) other sectors provided with square pinholes having side $L_2$ adjacent to the sector 1260'; such additional sectors may be selected by rotating the circular mask 125' in the x-y plane of the support: provided that the pinholes of each sector does not overlap with the pinholes of the other sectors having pinholes of equal size (i.e. of side $L_1$ or $L_2$), the presence of additional sectors allows to scan the entire (plane of the) sample 160 by replacing at least some translations of the circular mask 125' with rotations (which select the additional sectors).

In the following of the description, reference will be made to the case where the mask 125 is a rectangular mask having two rectangular sectors 1250 and 1260 provided with respective sets of four pinholes 1255 and 1265 having square shape and with two respective sizes different for the two sectors, as illustrated with reference to Figure 2 (i.e. with $L_2 = 2 \cdot L_1$, $D_1 = 2 \cdot L_1$ and $D_2 = 2 \cdot L_2$). However, it must be noted that the mask of the confocal microscope 100 according to the invention may also have a shape different from the rectangular one, e.g. a circular shape, and/or a different number of pinholes and/or two types of pinholes with the same shape even different from the square shape (and with respective different sizes), without so departing from the scope of protection of the present invention.

In general, making reference to Figure 1, in a first point in time $t_1$, the basic light beam is caused to pass through at least a first pinhole, producing a respective excitation light beam that give rise to an image with a determined ROI (Region Of Interest). However, the fluorescent beam emitted by the (plane of the) sample 160 is left free, withouth any grid or pinhole filtering it. Pointing at the same point of the (plane of the) sample 160, the basic light beam in a second point in time $t_2$ is caused to pass through at least one second pinhole producing a respective excitation light beam: even in this case the fluorescent beam emitted by the (plane of the) sample 160 is left free, withouth any grid or pinhole filtering it. Through the processing described in detail in the following, it is hence precisely obtained the PSF of the optics 155 of the microscope 100.

The process of acquisition comprising the two aforementioned steps is iterated making a scanning of the entire (plane of the) sample 160 (thanks to the automated moving assembly 130 that moves the support housing the mask 124) and adding the single partial acquired images, thus obtaining at the end of the acquisition process an image of the entire (plane of the) sample 160 equal to the sum of the single partial acquired images.

Each acquired image $A_k$ (i.e. acquired as the sum of the single partial images) of the (plane of the) sample 160 through the two respective types of pinholes (whereby $k \in \{k_1, k_2\}$, where $k_1$ and $k_2$ will be also indicated in the following as ($k$ - 1) and $k$), represents, in a first approximation, the image of the object that is being observed, that is indicated in the following with $I$, convoluted with a proper function $f_k$. As disclosed by T. Wilson et al. (in "Size of the detector in confocal imaging systems", Optics letters, vol. 12, no. 4, April 1987), by T. Wilson et al. (in "Effect of detector displacement in confocal imaging systems", Applied Optics, vol. 27, no. 18, September 1988), by R.H. Webb (in "Confocal optical microscopy", Reports on Progress in Physics, 1996, Vol. 59, No. 3, pp. 427-471), by T. Wilson (in "Resolution and optical sectioning in the confocal microscope", Journal of Microscopy, vol. 244, 2011), and by the aforementioned O. Hollricher et al., Y. Wang et al., C. Kuang et al., R. Heintzmann et al. and M. Martinez-Corral et al., the function $f_k$ may be written as convolution product between the PSF of the optics, that will be indicated with $p$, and the geometric function describing the hole, that will be indicated with $P_k$, whereby (by indicating with "*" the convolution product):

$$A_k = I * f_k$$

with

$$f_k = p * P_k$$

The process of acquiring and processing images according to the invention uses the images obtained from the sectors 1250 and 1260 having pinholes 1255 and 1265 with different sizes to obtain an estimate of the convolution core $f_k$, to be used as estimate of the PSF of the optics 155 of the microscope 100 in a deconvolution algorithm, possibly as initial guess of such PSF in an iterative deconvolution algorithm, for the image produced by the acquisition with the second sector 1260 having pinholes 1265 of larger size. In other words, the two images $A_k$ and $A_{k-1}$ obtained with pinholes 1260 and 1250, respectively, one having size twice the other one ($L_2 = 2 \cdot L_1$) may be used to provide an estimate of the convolution core $f_k$ (i.e. an estimate of the PSF of the optics 155 of the microscope 100), to be used in a deconvolution algorithm for the $A_k$, possibly as initial guess in an iterative deconvolution algorithm for the $A_k$.

By indicating in general the Fourier transform of $z$ with $\hat{z}$, the complex conjugate of $z$ with $z^*$, and the absolute value of $z$ with $|z|$, since:

$$\hat{A}_{k-1}(\omega) = \hat{I}(\omega)\hat{f}_{k-1}(\omega) \qquad [1]$$

and

$$\hat{A}_k(\omega) = \hat{I}(\omega)\hat{f}_k(\omega) \qquad [2]$$

it is:

$$A_k = A_{k-1} * g$$

where $g$ is a function such that

$$\hat{g}(\omega) = \frac{\hat{f}_{k-1}^{\,*}(\omega)\,\hat{f}_k(\omega)}{\left|\hat{f}_{k-1}(\omega)\right|^2}$$

In fact, from the equality [1], it is:

$$\hat{I}(\omega) = \hat{A}_{k-1}(\omega)\frac{\hat{f}_{k-1}^{\,*}(\omega)}{\left|\hat{f}_{k-1}(\omega)\right|^2}$$

that, substituted in the equality [2], gives:

$$\hat{A}_k(\omega) = \hat{A}_{k-1}(\omega)\frac{\hat{f}_{k-1}^{\,*}(\omega)\hat{f}_k(\omega)}{\left|\hat{f}_{k-1}(\omega)\right|^2}$$

Since $f_k = p * P_k$ and $f_{k-1} = p * P_{k-1}$, it is:

$$\hat{g}(\omega) = \frac{\hat{P}_{k-1}^{*}(\omega)\hat{P}_k(\omega)}{\left|\hat{P}_{k-1}(\omega)\right|^2}$$

[3]

In the case of sectors 1260 and 1250 with square pinholes with one side twice the other one ($L_2 = 2 \cdot L_1$):

$$\hat{g}(\omega) = 2cos\left(T_{k-1}\frac{\omega}{2}\right)$$

with $T_{k-1} = L_1$ equal to the size, i.e. to the side, of the smallest pinhole square 1255 and

$$\hat{P}_{k-1}(\omega) = 2\frac{sin(T_{k-1}\omega/2)}{\omega}$$

and similarly for $\hat{P}_k(\omega)$, with $T_k = 2 \cdot T_{k-1}$ equal to the size, i.e. to the side, of the largest pinhole square 1265. Thus, the function $g$ has narrower support over time with respect to $P_{k-1}$ and $P_k$ (in fact, $\hat{P}_{k-1}(\omega)$ and $\hat{P}_k(\omega)$ decay faster than $\hat{g}(\omega)$ with respect to $\omega$) and, hence, also with respect to $f_k$ and $f_{k-1}$ (which, by definition, have a wider support than $P_k$ and $P_{k-1}$ since obtained as convolution product of these with $p$). It follows that $g$ may be used in a deconvolution algorithm, possibly an iterative algorithm, of the image $A_k$ to obtain an image with higher resolution of the $A_{k-1}$.

Similarly, in the case where the dimensional ratio ($L_2/L_1$) between the side $L_2$ of the pinholes 1265 of the second sector 1260 and the side $L_1$ of the pinholes 1255 of the first sector 1250 is equal to a power of 2, whereby

$$L_2 = 2^n \cdot L_1 \text{ , with n > 1,}$$

i.e.:

$$T_k = 2^n T_{k-1}$$

it is

$$\hat{g}(\omega) = 2^n \prod_{k=0}^{n-1} cos\left(2^{j-1}T_{k-1}\omega\right)$$

and even in this case $g$ has narrower support over time with respect to $P_{k-1}$ and $P_k$ and it may be used as an estimate in an algorithm, possibly an iterative algorithm, of deconvolution of the image $A_k$ to obtain an image with higher resolution of the $A_{k-1}$.

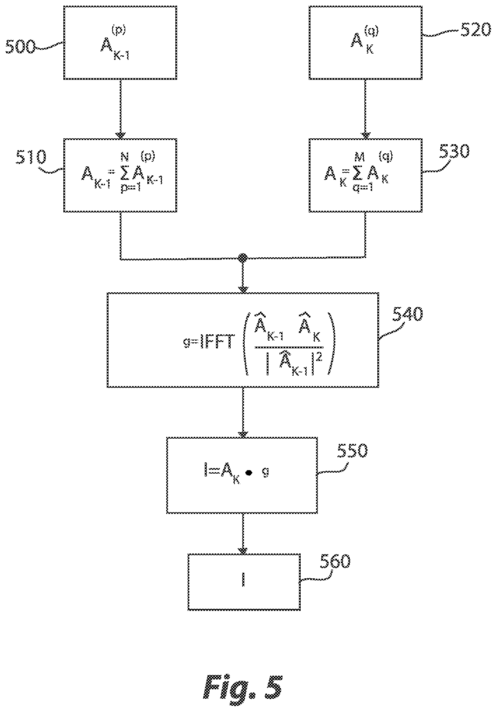

With reference to Figure 5, it may be observed that a first embodiment of the acquisition and processing process according to the invention comprises the following steps:

A. acquiring two overall images $A_k$ and $A_{k-1}$ of the entire (plane of the) sample 160 through the two sectors of the mask 125 provided with pinholes 1260 and 1250, respectively, having sizes one twice the other one ($L_2 = 2 \cdot L_1$); in particular, such step comprises the following four sub-steps:

A.1 acquiring N first partial images $A_{k-1}^{(p)}$, with $p$ ranging from 1 to N, of the (plane of the) sample 160 through the first sector of the mask (with square pinholes of side $L_1$); such sub-step is represented in Figure 5 by block 500;

A.2 adding all the N first partial images $A_{k-1}^{(p)}$ to obtain the acquired first overall image $A_{k-1}$ of the entire (plane of the) sample 160 (through the square pinholes of side $L_1$):

$$A_{k-1} = \sum_{p=1}^{N} A_{k-1}^{(p)} \, ;$$

such sub-step is rappresentata in Figure 5 by block 510;

A.3 acquiring M second partial images $A_k^{(q)}$, with $q$ ranging from 1 to M, of the (plane of the) sample 160 through the second sector of the mask (with square pinholes of side $L_2$); in particular, since the dimensional ratio ($L_2/L_1$) is equal to the ratio between the distances ($D_2/D_1$) and the number of pinholes of the first sector is equal to the number of pinholes of the second sector, it follows that M=N; however, it must be noted that, in general, the number of pinholes of the two sectors may be different and hence M and N may be different from each other and not having any order relation, still maintaining the dimensional ratio ($L_2/L_1$) and the ratio between the distances ($D_2/D_1$)) equal to each other; such sub-step is represented in Figure 5 by block 520;

A.4 adding all the M second partial images $A_k^{(q)}$ to obtain the acquired second overall image $A_k$ of the entire (plane of the) sample 160 (through the square pinholes of side $L_2$):

$$A_k = \sum_{q=1}^{M} A_k^{(q)} ;$$

such sub-step is represented in Figure 5 by block 530;

B. estimating the PSF of the optics 155 of the microscope 100 (i.e. convolution core $f_k$) as equal to the inverse Fourier transform of the following quantity:

$$\hat{g}(\omega) = \frac{\hat{A}_{k-1}^{*}(\omega)\hat{A}_k(\omega)}{\left|\hat{A}_{k-1}(\omega)\right|^2}$$

(such step is represented in Figure 5 by block 540); in particular, the acquisition and processing process according to the invention comprises the following four sub-steps:

B.1 calculating the Fourier transform, through a fast Fourier transform aka FFT, of the acquired first overall image $A_{k-1}$ of the entire (plane of the) sample 160:

$$\hat{A}_{k-1}(\omega) = FFT(A_{k-1})$$

B.2 calculating the Fourier transform, through a FFT of the acquired second overall image $A_k$ of the entire (plane of the) sample 160:

$$\hat{A}_k(\omega) = FFT(A_k)$$

B.3 calculating the Fourier transform $\hat{g}(\omega)$ of the estimate $g$ of the PSF of the optics 155 of the microscope 100, on the basis of the FFT values obtained in sub-steps B.1 and B.2, according to the following equation:

$$\hat{g}(\omega) = \frac{\hat{A}_{k-1}^{*}(\omega)\hat{A}_k(\omega)}{\left|\hat{A}_{k-1}(\omega)\right|^2}$$

B.4 calculating the estimate $g$ of the PSF of the optics 155 of the microscope 100, through an inverse Fourier transform, performed through an inverse fast Fourier transform aka IFFT of the Fourier transform $\hat{g}$ calculated in sub-step B.3:

$$g = IFFT(\hat{g}(\omega))$$

C. deconvolving the acquired second overall image $A_k$ of the entire (plane of the) sample 160 using the estimate $g$ of the PSF of the optics 155 of the microscope 100 obtained in step B, through a main deconvolution algorithm (such step is represented in Figure 5 by block 550, where the symbol "●" is used to represent the deconvolution), thus obtaining the resulting image $I$ of the (plane of the) sample 160:

$$I = A_k \bullet g$$

where the resulting image $I$ of the (plane of the) sample 160 could be displayed on a display and/or stored in a memory in an optional step D (represented in Figure 5 by block 560).

The main deconvolution algorithm of step C may be either a simple deconvolution operation, or an iterative deconvolution algorithm using the estimate $g$ of the PSF of the optics 155 of the microscope 100 obtained in step B as initial guess of such PSF. By way of example and not by way of limitation, some of such iterative deconvolution algorithms are disclosed by G.R. Ayers et al. in "Iterative Blind Deconvolution Method and Its applications", Optics Letters, Vol. 13, No. 7, 1988, pp. 547-549, by N. Nakajima in "Blind deconvolution using the maximum likelihood estimation and the iterative algorithm", Optics Communications, Vol. 100, Issues 1-4, July 1993, pp. 59-66, by D. Kundur et al. in "Blind Image Deconvolution Revisited", IEEE Magazine on Signal Processing, Vol. 13, No. 6, 1996, pp. 61-63, by D.A. Fish in "Blind Deconvolution by Means of the Richardson-Lucy Algorithm", Journal of the Optical Society of America A, Vol. 12, No. 1, 1995, pp. 58-65, by D.S.C. Biggs et al. in "Acceleration of Iterative Image Restoration Algorithms", Applied Optics, Vol. 36, No. 8, 1997, pp. 1766-1775, by M. Jiang et al. in "Development of Blind Image Deconvolution and Its Applications", Journal of X-ray Science and Ology, Vol. 11, 2003, pp. 13-19, by H.Y. Liu et al. in "Study on the Methods of Super Resolution Image Reconstruction", The International Archives of the Photognanmetry, Remote Sensing and Spatial Information Science, Vol. XXVII, Part B2, Beijing, 2008, and by D. Kundur et al. in "Blind Image Deconvolution", IEEE Magazine on Signal Processing, Vol. 13, No. 3, 1996, pp. 43-64.

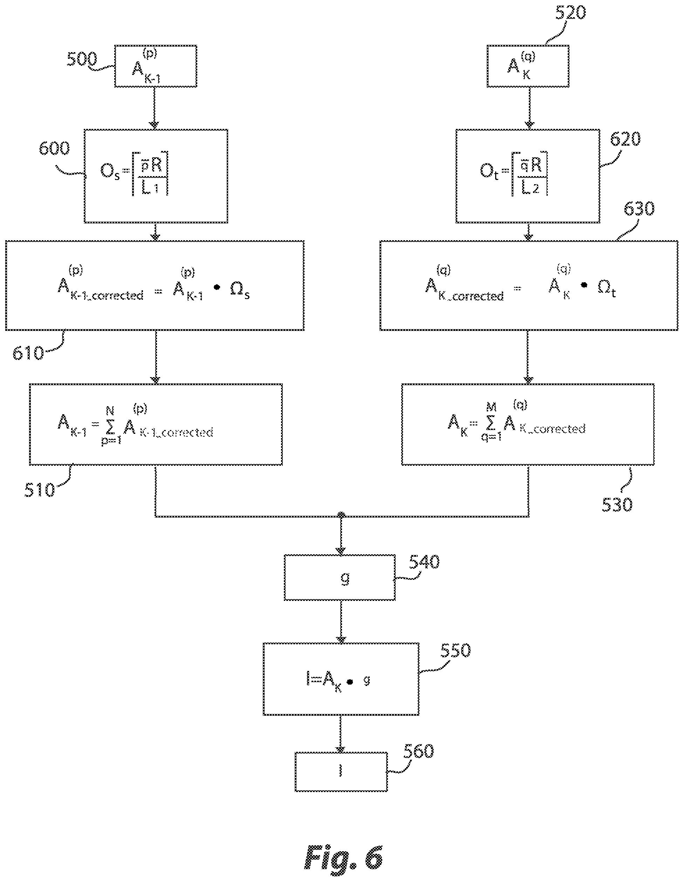

A second embodiment of the acquisition and processing process according to the invention, shown in Figure 6, comprises some additional sub-steps, being part of step A, with respect to the process of Figure 5, which allow to further increase the resolution of the resulting image $I$ of the (plane of the) sample 160, taking account of the device for acquiring and storing the images, i.e. of the resolution of the sensor 170 (optionally a CCD sensor or a sCMOS sensor) for the N acquired first partial images $A_{k-1}^{(p)}$ and for the M acquired second partial images $A_k^{(q)}$.

In this regard, a pixel of each partial acquired image ( $A_{k-1}^{(p)}$ and $A_k^{(q)}$ ) may contain information deriving from a pinhole, a fraction of pinhole or a plurality of pinholes. The action of the sensor 170 (e.g. a CCD), hence, may be seen also as a convolution product of the partial target image ($I^{(p)}$ or $I^{(q)}$) of the (plane of the) sample 160 in the corresponding partial acquired image ( $A_{k-1}^{(p)}$ or $A_k^{(q)}$ ), and hence it must be thorough as furthermore convolved with a kernel function $C_S$ or $C_t$, respectively, the support of which depends on the resolution of the sensor 170 and on the size of the pinholes through which the images are being acquired.

In the second embodiment of the acquisition and processing process according to the invention, this effect of the resolution of the sensor 170 and of the size of the pinholes is preliminarily treated. In particular, the single partial acquired images $A_{k-1}^{(p)}$ and $A_k^{(q)}$ of the (plane of the) sample 160 for each position of the first or second sector, respectively, of the mask 125, before being added in sub-steps A.2 and A.4 to obtain the prima or second overall image $A_{k-1}$ or $A_k$ of the entire (plane of the) sample 160, are also subjected to a preliminary deconvolution algorithm wherein the kernel function $C_s$ or $C_t$ operates as PSF. In particular, the kernel function $C_s$ (or $C_t$) is equivalent to a median filter $\chi_{\Omega_s}$ (or $\chi_{\Omega_t}$), i.e. $C_S = \chi_{\Omega_s}$ (or $C_t = \chi_{\Omega_t}$), where $\Omega_s$ (or $\Omega_t$) represents the square support of the median filter.

By indicating the resolution (optionally in microns) of the sensor 170 (e.g. the CCD) with $R \times R$ and the size of the square pinholes 1255 on the mask 125 through which the N acquired first partial images $A_{k-1}^{(p)}$, with $p$ ranging from 1 to N, are acquired for the estimate of the median filter $\Omega_S$ with $L_1 \times L_1$, step A of the process of Figure 6 comprises, after sub-step A.1 and before sub-step A.2, the following additional sub-steps:

A.5 estimating the size $O_s \times O_s$ of the first median filter $\Omega_S$ applied by the sensor 170 with resolution $R \times R$ through the following formula:

$$O_s = \left\lceil \frac{\bar{p}R}{L_1} \right\rceil$$

wherein operator $\lceil h \rceil$ returns rounding up to upper end of $h$ (i.e. it returns the smallest integer not lower than $h$), and wherein

$$\bar{p} = argmin_{p \in \mathbb{N}}\{(pR - L_1) > 0\}$$

where $\mathbb{N}$ is the set of natural numbers; such sub-step is represented in Figure 6 by block 600;

A.6 deconvolving each one of the N acquired first partial images $A^{(p)}_{k-1}$ of the (plane of the) sample 160 using the estimate of the first median filter $\Omega_S$ of size $O_s \times O_s$ obtained in sub-step A.5, through a preliminary deconvolution algorithm, obtaining the corresponding corrected partial image $A^{(p)}_{k-1\_corrected}$:

$$A^{(p)}_{k-1\_corrected} = A^{(p)}_{k-1} \bullet \Omega_S$$

and replacing each acquired first partial image $A^{(p)}_{k-1}$ with the corresponding corrected partial image $A^{(p)}_{k-1\_corrected}$ resulting from the deconvolution; such sub-step is represented in Figure 6 by block 610.

Similarly, by indicating the size of the square pinholes 1265 on the mask 125 through which the M acquired second partial images $A^{(q)}_{k}$, with $q$ ranging from 1 to M, are acquired for the estimate of the median filter $\Omega_t$ with $L_2 \times L_2$, step A of the process of Figure 6 further comprises, after sub-step A.3 and before sub-step A.4, the following additional sub-steps:

A.7 estimating the size $O_t \times O_t$ of the second median filter $\Omega_t$ applied by the sensor 170 with resolution $R \times R$ through the following formula:

$$O_t = \left\lceil \frac{\bar{q}R}{L_2} \right\rceil$$

wherein

$$\bar{q} = argmin_{q \in \mathbb{N}}\{(qR - L_2) > 0\}$$

such sub-step is represented in Figure 6 by block 620;

A.8 deconvolving each one of the M acquired second partial images $A^{(q)}_{k}$ of the (plane of the) sample 160 using the estimate of the second median filter $\Omega_t$ of size $O_t \times O_t$ obtained in sub-step A.7, through the preliminary deconvolution algorithm, obtaining the corresponding corrected partial image $A^{(q)}_{k\_corrected}$:

$$A^{(q)}_{k\_corrected} = A^{(q)}_{k} \bullet \Omega_t$$

and replacing each acquired first partial image $A_k^{(q)}$ with the corresponding corrected partial image $A_{k\_corrected}^{(q)}$ resulting from the deconvolution; such sub-step is represented in Figure 6 by block 630.

Obviously, in the process of Figure 6, sub-step A.2 (represented by block 510) adds all the N corrected first partial images $A_{k-1\_corrected}^{(p)}$ to obtain the acquired first overall image $A_{k-1}$ of the entire sample 160 (through the square pinholes of side $L_1$):

$$A_{k-1} = \sum_{p=1}^{N} A_{k-1\_corrected}^{(p)} ,$$

and, similarly, sub-step A.4 (represented by block 530) adds all the M corrected second partial images $A_{k\_corrected}^{(q)}$ to obtain the acquired second overall image $A_k$ of the entire (plane of the) sample 160 (through the square pinholes of side $L_2$):

$$A_k = \sum_{q=1}^{M} A_{k\_corrected}^{(q)}.$$

Even in the case of sub-steps A.6 and A.8, the preliminary deconvolution algorithm may be either a simple deconvolution operation, or an iterative deconvolution algorithm using the estimate of the first median filter $\Omega_s$ obtained in sub-step A.5 or the estimate of the second median filter $\Omega_t$ obtained in sub-step A.7 as initial guess of such first or second median filter.

The preferred embodiments of this invention have been described and a number of variations have been suggested hereinbefore, but it should be understood that those skilled in the art can make other variations and changes without so departing from the scope of protection thereof, as defined by the attached claims.

**Claims**

1. Process of acquiring and processing images in confocal microscopy, comprising the following step:

   A. acquiring (500, 510; 520, 530), by means of a sensor (170) of image acquisition having its own resolution *R* x *R,* a first overall image $A_{k-1}$ of an entire plane of a sample (160) scanning the same with a first excitation light beam, obtained by making a basic light beam pass through one or more first pinholes (1255; 1255') having a shape and a first size ($L_1$; $L_{a1}$, $L_{b1}$) and transmitted to an optics (155) of a confocal microscope (100) that is focused on said plane of the sample (160) and that has a PSF, and acquiring a second overall image $A_k$ of the entire plane of the sample (160) scanning the same with a second excitation light beam, obtained by making said basic light beam pass through one or more second pinholes (1265; 1265') having a shape equal to the shape of said one or more first pinholes (1255; 1255') and a second size ($L_2$; $L_{a2}$, $L_{b2}$) larger than the first size ($L_1$; $L_{a1}$, $L_{b1}$), wherein said one or more first pinholes (1255; 1255') and said one or more second pinholes (1265; 1265') are arranged in a plane optically conjugated to said plane of the sample (160);

   **characterized in that** the process comprises the following further steps:

   B. calculating (540) an estimate *g* of the point spread function, PSF, of the optics (155) of the microscope (100), through an inverse Fourier transform of the Fourier transform $\hat{g}$ calculated as follows:

$$\hat{g}(\omega) = \frac{\hat{A}_{k-1}^{*}(\omega)\hat{A}_k(\omega)}{\left|\hat{A}_{k-1}(\omega)\right|^2}$$

   where $\hat{A}_{k-1}(\omega)$ is the Fourier transform of the acquired first overall image $A_{k-1}$ and $\hat{A}_k(\omega)$ is the Fourier transform of the acquired second overall image $A_k$; and

C. deconvolving (550) the acquired second overall image $A_k$ using the estimate $g$ of the PSF of the optics (155) of the microscope (100) through a main deconvolution algorithm, obtaining the resulting image $I$ of the entire plane of the sample (160):

$$I = A_k \bullet g .$$

**2.** Process according to claim 1, **characterised in that** the acquiring step A performs a suppression of aliasing phenomena in the acquired first overall image $A_{k-1}$ and in the acquired second overall image $A_k$.

**3.** Process according to claim 1 or 2, **characterised in that** the shape of said one or more first pinholes (1255; 1255') and of said one or more second pinholes (1265; 1265') is a parallelogram, optionally a rectangular parallelogram, wherein each one of said one or more first pinholes (1255; 1255') has sides $L_{a1}$ and $L_{b1}$ and each one of said one or more second pinholes (1265; 1265') has sides $L_{a2}$ and $L_{b2}$, dimensional ratios $(L_{a2}/L_{a1})$ and $(L_{b2}/L_{b1})$ between homologous sides being identical and larger than 1, whereby

$$(L_{a2}/L_{a1}) = (L_{b2}/L_{b1}) > 1$$

optionally equal to a power of 2, whereby

$$(L_{a2}/L_{a1}) = (L_{b2}/L_{b1}) = 2^n , \text{ with } n > 1$$

more optionally equal to 2, whereby

$$(L_{a2}/L_{a1}) = (L_{b2}/L_{b1}) = 2.$$

**4.** Process according to claim 3, **characterised in that** said one or more first pinholes (1255; 1255') are at least two and said one or more second pinholes (1265; 1265') are at least two, and **in that**:

- at least two first pinholes (1255; 1255') are spaced apart from each other along a direction parallel to a first side $L_{a1}$ by a first distance $D_{a1}$ and at least two second pinholes (1265; 1265') are spaced apart from each other along a direction parallel to a first side $L_{a2}$, homologous to the first side $L_{a1}$ of said first pinholes (1255; 1255'), by a second distance $D_{a2}$, the dimensional ratio $(D_{a2}/D_{a1})$ between the second and the first distances being identical to the dimensional ratios $(L_{a2}/L_{a1})$ and $(L_{b2}/L_{b1})$ between homologous sides, whereby

$$(D_{a2}/D_{a1}) = (L_{a2}/L_{a1}) = (L_{b2}/L_{b1}) > 1,$$

wherein the first distance $D_{a1}$ is optionally equal to a first integer multiple j of the first side $L_{a1}$ of said first pinholes (1255; 1255'), whereby $D_{a1} = j \cdot L_{a1}$, with j equal to an integer larger than or equal to 1, whereby the second distance $D_{a2}$ is equal to the first integer multiple j of the first side $L_{a2}$ of said second pinholes (1265; 1265'), i.e. $D_{a2} = j \cdot L_{a2}$, and/or
- at least two first pinholes (1255; 1255') are spaced apart from each other along a direction parallel to a second side $L_{b1}$ by a third distance $D_{b1}$ and at least two second pinholes (1265; 1265') are spaced apart from each other along a direction parallel to a second side $L_{b2}$, homologous to the second side $L_{b1}$ of said first pinholes (1255; 1255'), by a fourth distance $D_{b2}$, the dimensional ratio $(D_{b2}/D_{b1})$ between the fourth and the third distances being identical to the dimensional ratios $(L_{a2}/L_{a1})$ and $(L_{b2}/L_{b1})$ between homologous sides, whereby

$$(D_{b2}/D_{b1}) = (L_{a2}/L_{a1}) = (L_{b2}/L_{b1}) > 1,$$

wherein the third distance $D_{b1}$ is optionally equal to a second integer multiple k of the second side $L_{b1}$ of said first pinholes (1255; 1255'), whereby $D_{b1} = k \cdot L_{b1}$, with k equal to an integer larger than or equal to 1, whereby the fourth distance $D_{b2}$ is equal to the second integer multiple k of the second side $L_{b2}$ of said second pinholes (1265; 1265'), i.e. $D_{b2} = k \cdot L_{b2}$.

5. Process according to any one of the preceding claims, **characterised in that**, in the acquiring step A, during scanning of the entire plane of the sample (160) with the first excitation light beam, said one or more first pinholes (1255; 1255') are translated in their own plane along at least one of two directions, which are optionally parallel to two sides of the shape of said first pinholes (1255; 1255'), and, during scanning of the entire plane of the sample (160) with the second excitation light beam, said one or more second pinholes (1265; 1265') are translated in their own plane along at least one of two directions, which are optionally parallel to two sides of the shape of said second pinholes (1265; 1265').

6. Process according to claim 5, when depending on claim 4, **characterised in that** the shape of said one or more first pinholes (1255; 1255') is a square of side $L_1$ and the shape of said one or more second pinholes (1265; 1265') is a square of side $L_2$, wherein the dimensional ratio ($L_2/L_1$) between the sides of the first and second pinholes (1255, 1265; 1255', 1265') is equal to 2, whereby

$$(L_2/L_1) = 2,$$

said one or more first pinholes (1255; 1255') being a plurality of first pinholes (1255; 1255') arranged in an array and spaced apart from one another by a distance $D_1$ equal to twice their side $L_1$, whereby

$$D_1 = 2 \cdot L_1,$$

said one or more second pinholes (1265; 1265') being a plurality of second pinholes (1265; 1265') arranged in an array and spaced apart from one another by a distance $D_2$ equal to twice their side $L_2$, whereby

$$D_2 = 2 \cdot L_2 = 4 \cdot L_1,$$

wherein, in the acquiring step A, during scanning of the entire plane of the sample (160) with the first excitation light beam, the plurality of first pinholes (1255; 1255') is translated in the plane of said first pinholes (1255; 1255') along at least one of two orthogonal directions which are parallel to the sides of said first pinholes (1255; 1255'), and, during scanning of the entire plane of the sample (160) with the second excitation light beam, the plurality of second pinholes (1265; 1265') is translated in the plane of said second pinholes (1265; 1265') along at least one of two orthogonal directions which are parallel to the sides of said second pinholes (1265; 1265').

7. Process according to any one of the preceding claims, **characterised in that**, in the deconvolving step C, the main deconvolution algorithm is a deconvolution operation or an iterative deconvolution algorithm using the estimate $g$ of the PSF of the optics (155) of the microscope (100) as initial guess of such PSF.

8. Process according to any one of the preceding claims, **characterised in that** step B of calculating the estimate $g$ of the PSF of the optics (155) of the microscope (100) comprises the following sub-steps:

B.1 calculating the Fourier transform through a fast Fourier transform, aka FFT, of the acquired first overall image $A_{k-1}$:

$$\hat{A}_{k-1}(\omega) = FFT(A_{k-1})$$

B.2 calculating the Fourier transform through a FFT of the acquired second overall image $A_k$:

$$\hat{A}_k(\omega) = FFT(A_k)$$

B.3 calculating the Fourier transform $\hat{g}(\omega)$ of the estimate $g$ of the PSF of the optics (155) of the microscope (100) on the basis of the FFT values obtained in sub-steps B.1 and B.2, as follows:

$$\hat{g}(\omega) = \frac{\hat{A}_{k-1}^{*}(\omega)\hat{A}_k(\omega)}{\left|\hat{A}_{k-1}(\omega)\right|^2}$$

B.4 calculating the estimate $g$ of the PSF of the optics (155) of the microscope (100) through an inverse Fourier transform performed through an inverse fast Fourier transform, aka IFFT, of the Fourier transform $\hat{g}(\omega)$ calculated in sub-step B.3:

$$g = IFFT(\hat{g}(\omega))$$

9. Process according to any one of the preceding claims, **characterised in that** the acquiring step A comprises the following sub-steps:

A.1 acquiring N first partial images $A_{k-1}^{(p)}$, with $p$ ranging from 1 to N, of said plane of the sample (160) through said one or more first pinholes (1255; 1255');

A.2 adding all the N first partial images $A_{k-1}^{(p)}$ to obtain the acquired first overall image $A_{k-1}$:

$$A_{k-1} = \sum_{p=1}^{N} A_{k-1}^{(p)} \; ;$$

A.3 acquiring M second partial images $A_k^{(q)}$, with $q$ ranging from 1 to M, of said plane of the sample (160) through said one or more second pinholes (1265; 1265');

A.4 adding all the M second partial images $A_k^{(q)}$ to obtain the acquired second overall image $A_k$:

$$A_k = \sum_{q=1}^{M} A_k^{(q)}.$$

10. Process according to claim 9, **characterised in that** the acquiring step A further comprises the following additional sub-steps:

- after sub-step A.1 and before sub-step A.2:

A.5 calculating (600) an estimate of a size $O_s \; x \; O_s$ of a first median filter $\Omega_S$ applied by the sensor (170) through the following formula:

$$O_s = \left\lceil \frac{\bar{p}R}{L_1} \right\rceil$$

wherein operator $\lceil h \rceil$ returns rounding up to upper end of h, and wherein

$$\bar{p} = argmin_{p \in \mathbb{N}}\{(pR - L_1) > 0\}$$

where $\mathbb{N}$ is the set of natural numbers;

A.6 deconvolving (610) each one of the N acquired first partial images $A_{k-1}^{(p)}$ using the estimate of the first median filter $\Omega_S$ of size $O_s \; x \; O_s$ obtained in sub-step A.5, through a preliminary deconvolution algorithm, obtaining the corresponding corrected partial image $A_{k-1\_corrected}^{(p)}$:

$$A_{k-1\_corrected}^{(p)} = A_{k-1}^{(p)} \bullet \Omega_S$$

and replacing each acquired first partial image $A^{(p)}_{k-1}$ with the corresponding corrected partial image $A^{(p)}_{k-1\_corrected}$ resulting from the deconvolution, whereby sub-step A.2 adds all the N corrected first partial images $A^{(p)}_{k-1\_corrected}$ to obtain the acquired first overall image $A_{k-1}$, as follows:

$$A_{k-1} = \sum_{p=1}^{N} A^{(p)}_{k-1\_corrected} \; ;$$

- after sub-step A.3 and before sub-step A.4:

A.7 calculating (620) an estimate of a size $O_t \times O_t$ of a second median filter $\Omega_t$ applied by the sensor (170) through the following formula:

$$O_t = \left\lceil \frac{\bar{q}R}{L_2} \right\rceil$$

wherein

$$\bar{q} = argmin_{q \in \mathbb{N}}\{(qR - L_2) > 0\} \; ;$$

A.8 deconvolving (630) each one of the M acquired second partial images $A^{(q)}_{k}$ using the estimate of the second median filter $\Omega_t$ of size $O_t \times O_t$ obtained in sub-step A.7, through the preliminary deconvolution algorithm obtaining the corresponding corrected partial image $A^{(q)}_{k\_corrected}$:

$$A^{(q)}_{k\_corrected} = A^{(q)}_{k} \bullet \Omega_t$$

and replacing each acquired second partial image $A^{(q)}_{k}$ with the corresponding corrected partial image $A^{(q)}_{k\_corrected}$ resulting from the deconvolution, whereby sub-step A.4 adds all the M corrected second partial images $A^{(q)}_{k\_corrected}$ to obtain the acquired second overall image $A_k$, as follows:

$$A_k = \sum_{q=1}^{M} A^{(q)}_{k\_corrected} \; ,$$

whereby step A compensates a convolving effect of a resolution of the sensor (170) and of the size of said one or more first pinholes (1255; 1255') and of said one or more second pinholes (1265; 1265').

11. Process according to claim 10, **characterised in that**, in the deconvolving step C, the preliminary deconvolution algorithm is a deconvolution operation or an iterative deconvolution algorithm using the estimate of the first median filter $\Omega_s$ obtained in sub-step A.5 or the estimate of the second median filter $\Omega_t$ obtained in sub-step A.7 as initial guess of such first or second median filter $\Omega_s$ or $\Omega_t$.

12. Confocal microscope (100), comprising:

- a light source (110) configured to illuminated with a basic light beam at least one mask (125) to obtain an excitation light beam, the mask being provided with a first sector (1250), having one or more first pinholes (1255; 1255') having a shape and a first size ($L_1$; $L_{a1}$, $L_{b1}$), configured to obtain a first excitation light beam, and with a second sector (1260), having one or more second pinholes (1265; 1265') having a shape equal to the shape of said one or more first pinholes (1255; 1255') and a second size ($L_2$; $L_{a2}$, $L_{b2}$) larger than the first size ($L_1$; $L_{a1}$, $L_{b1}$), configured to obtain a second excitation light beam,
- moving means (130) configured to move said at least one mask (125) on a plane of said at least one mask (125) that is optically conjugated to a plane of a sample (160),
- an optics (155) focused on said plane of the sample (160),
- an image acquiring sensor (170), having its own resolution $R \times R$, **characterized in that** the image acquiring sensor (170) is configured to sense in widefield a fluorescent beam emitted by said plane of the sample (160), and **in that**
- a processing central unit (180) is configured to control the operation of the confocal microscope (100) and to execute the process of acquiring and processing images in confocal microscopy according to any one of claims 1 to 11.

**13.** Confocal microscope (100) according to claim 12, **characterised in that** the shape of said one or more first pinholes (1255; 1255') and of said one or more second pinholes (1265; 1265') is a parallelogram, wherein each one of said one or more first pinholes (1255; 1255') has sides $L_{a1}$ and $L_{b1}$ and each one of said one or more second pinholes (1265; 1265') has sides $L_{a2}$ and $L_{b2}$, dimensional ratios ($L_{a2}/L_{a1}$) and ($Lb_2/Lb_1$) between homologous sides being identical and larger than 1, whereby

$$(L_{a2}/L_{a1}) = (L_{b2}/L_{b1}) > 1,$$

, whereby

$$(L_{a2}/L_{a1}) = (L_{b2}/L_{b1}) = 2^n \text{, with } n > 1$$

, whereby

$$(L_{a2}/L_{a1}) = (L_{b2}/L_{b1}) = 2,$$

wherein said moving means (130) is configured to translate said at least one mask (125) on its own plane along at least one of two directions, which are optionally parallel to two sides of the shape of said first pinholes (1255; 1255') and/or parallel to two sides of the shape of said second pinholes (1265; 1265').

**14.** Confocal microscope (100) according to claim 12 or 13, **characterised in that** the first sector (1250) and the second sector (1260) are part of only one mask (125), wherein:

- the mask (125) is rectangular and said moving means (130) is configured to translate the mask (125) so as to position a sector selected between the first sector (1250) and the second sector (1260) in a position in which it is configured to be illuminated by the basic light beam so as to produce an excitation light beam selected between the first excitation light beam and the second excitation light beam, or
- the mask (125) is circular and said moving means (130) is configured to rotate the mask (125) so as to position a sector selected between the first sector (1250) and the second sector (1260) in a position in which it is configured to be illuminated by the basic light beam so as to produce an excitation light beam selected between the first excitation light beam and the second excitation light beam.

**15.** Confocal microscope (100) according to any one of claims 12 to 14, **characterised in that** it further comprises a relay lens (140), positioned along an optical path of the first and of the second excitation light beam and configured to select said plane of the sample (160) that is optically conjugated to said plane of said at least one mask (125).

**Patentansprüche**

**1.** Verfahren zum Erfassen und Verarbeiten von Bildern in der konfokalen Mikroskopie, umfassend die folgende Schritt:

A. Erfassen (500, 510; 520, 530), mittels eines Sensors (170) der Bildaufnahme mit einer eigenen Auflösung $R \times R$, eines ersten Gesamtbildes $A_{k-1}$ einer gesamten Ebene einer Probe (160), die mit einem ersten Anregungslichtstrahl abgetastet wird, der erhalten wird, indem ein Grundlichtstrahl durch eine oder mehrere erste Lochblenden (1255; 1255') mit einer Form und einer ersten Größe ($L_1$; $L_{a1}$; $L_{b1}$) geführt wird und indem dieser zu einer Optik (155) eines konfokalen Mikroskops (100) übertragen wird, das auf die Ebene der Probe (160) fokussiert ist und das eine PSF aufweist, und Erfassen eines zweiten Gesamtbildes $A_k$ der gesamten Ebene der Probe (160) durch abtasten mit einem zweiten Anregungslichtstrahl, der erhalten wird durch passieren des Basislichtstrahls durch eine oder mehrere zweite Lochblenden (1265; 1265') mit einer Form, die der Form des einen oder der mehreren ersten Lochblenden (1255; 1255') entspricht, und einer zweite Größe ($L_2$; $L_{a2}$; $L_{b2}$), die größer ist als die erste Größe ($L_1$; $L_{a1}$; $L_{b1}$), wobei die eine oder die mehreren ersten Lochblenden (1255; 1255') und die eine oder die mehreren zweiten Lochblenden (1265; 1265') in einer Ebene angeordnet sind, die mit der Ebene der Probe (160) optisch konjugiert ist;

**dadurch gekennzeichnet, dass** das Verfahren die folgenden weiteren Schritte umfasst:

B. Berechnen (540) einer Schätzung $g$ der Punktverteilungsfunktion, PSF, der Optik (155) des Mikroskops (100) durch eine inverse Fourier-Transformation der Fourier-Transformation $g$, die wie folgt berechnet wird:

$$\hat{g}(\omega) = \frac{\hat{A}_{k-1}^{*}(\omega)\hat{A}_k(\omega)}{\left|\hat{A}_{k-1}(\omega)\right|^2}$$

wobei $\hat{A}_{k-1}(\omega)$ die Fourier-Transformation des erfassten ersten Gesamtbildes $A_{k-1}$ ist und $\ddot{A}_k(\omega)$ die Fourier-Transformation des erfassten zweiten Gesamtbildes $A_k$ ist; und

C. Entfalten (550) des erfassten zweiten Gesamtbildes $A_k$ unter Verwendung der Schätzung $g$ der PSF der Optik (155) des Mikroskops (100) durch einen Hauptentfaltungsalgorithmus, wobei das resultierende Bild $I$ der gesamten Ebene der Probe erhalten wird (160): $I = A_k \bullet g$.

2. Verfahren nach Anspruch 1, **dadurch gekennzeichnet, dass** der Erfassungsschritt A eine Unterdrückung von Aliasing-Phänomenen in dem erfassten ersten Gesamtbild $A_{k-1}$ und in dem erfassten zweiten Gesamtbild $A_K$ durchführt.

3. Verfahren nach Anspruch 1 oder 2, **dadurch gekennzeichnet, dass** die Form des einen oder der mehreren ersten Lochblenden (1255; 1255') und des einen oder der mehreren zweiten Lochblenden (1265; 1265') ein Parallelogramm ist, optional ein rechteckiges Parallelogramm, wobei jedes der einen oder mehreren ersten Lochblenden (1255; 1255') Seiten $L_{a1}$ und $L_{b1}$ aufweist, und jede der einen oder mehreren zweiten Lochblenden (1265; 1265') Seiten $L_{a2}$ und $L_{b2}$ hat, wobei die Dimensionsverhältnisse ($L_{a2} / L_{a1}$) und ($L_{b2} / L_{b1}$) zwischen einander entsprechenden Seiten gleich und größer als 1 sind, wobei

$$(L_{a2}/\ L_{a1}) \ = \ (L_{b2}/\ L_{b1}) \ > 1$$

optional gleich einer Zweierpotenz, wobei

$$(L_{a2}/\ L_{a1}) \ = \ (L_{b2}/\ L_{b1}) \ = 2^n, \qquad mit\ n > 1$$

weiter optional gleich 2, wobei

$$(L_{a2}/\ L_{a1}) \ = \ (L_{b2}/\ L_{b1}) \ = \ 2.$$

4. Verfahren nach Anspruch 3, **dadurch gekennzeichnet, dass** das eine oder die mehreren ersten Lochblenden (1255; 1255') mindestens zwei sind und das eine oder die mehreren zweiten Lochblenden (1265; 1265') mindestens zwei sind und

- mindestens zwei erste Lochblenden (1255; 1255') entlang einer zu einer ersten Seite $L_{a1}$ parallelen Richtung um einen ersten Abstand $D_{a1}$ voneinander beabstandet sind und mindestens zwei zweite Lochblenden (1265; 1265') entlang einer Richtung parallel voneinander um einen zweiten Abstand $D_{a1}$ beabstandet zu einer ersten

Seite $L_{a2}$, die der ersten Seite $L_{a1}$ der ersten Lochblenden (1255; 1255') entsprechen, sind, wobei das Dimensionsverhältnis ($D_{a2}$ / $D_{a1}$) zwischen dem zweiten und dem ersten Abstand mit den Dimensionsverhältnissen ($L_{a2}$ / $L_{a1}$) und ($L_{b2}$ / $L_{b1}$) zwischen einander entsprechenden Seiten identisch ist, wobei

$$(D_{a2}/\ D_{a1}) = (L_{a2}/\ L_{a1}) = (L_{b2}/\ L_{b1}) > 1\,,$$

wobei der erste Abstand $D_{a1}$ optional gleich einem ersten ganzzahligen Vielfachen j der ersten Seite $L_{ai}$ der ersten Lochblenden (1255; 1255') ist, wobei $D_{a1} = j \cdot L_{a1}$ ist, wobei j eine ganze Zahl größer oder gleich 1 ist, wobei der zweite Abstand $D_{a2}$ gleich dem ersten ganzzahligen Vielfachen j der ersten Seite $L_{a2}$ der zweiten Lochblenden (1265; 1265'), d.h. $D_{a2} = j \cdot L_{a2}$, und / oder
- mindestens zwei erste Lochblenden (1255; 1255') entlang einer zu einer zweiten Seite $L_{b1}$ parallelen Richtung um einen dritten Abstand $D_{b1}$ voneinander beabstandet sind und wenigstens zwei zweite Lochblenden (1265; 1265') entlang einer Richtung parallel zu einer zweiten Seite $L_{b2}$, die der zweiten Seite $L_{b1}$ der ersten Lochblenden (1255; 1255') entspricht, um einen vierten Abstand $D_{b2}$ beabstandet sind, wobei das Dimensionsverhältnis ($D_{b2}$ / $D_{b1}$) zwischen dem vierten und dem dritten Abstand identisch den Dimensionsverhältnissen ($L_{a2}$ / $L_{a1}$) und ($L_{b2}$ / $L_{b1}$) zwischen einander entsprechenden Seiten ist,

$$(D_{b2}/\ D_{b1}) = (L_{a2}/\ L_{a1}) = (L_{b2}/\ L_{b1}) > 1\,,$$

wobei der dritte Abstand $D_{b1}$ gegebenenfalls gleich einem zweiten ganzzahligen Vielfachen *k* der zweiten Seite $L_{b1}$ der ersten Lochblenden (1255; 1255') ist, wobei $D_{b1} = k \cdot L_{b1}$ ist, wobei *k* eine ganze Zahl größer oder gleich 1 ist, wobei der vierte Abstand $D_{b2}$ gleich dem zweiten ganzzahligen Vielfachen von k der zweiten Seite $L_{b2}$ der zweiten Lochblenden (1265; 1265') ist, d.h. $D_{b2} = k \cdot L_{b2}$.

5. Verfahren nach einem der vorhergehenden Ansprüche, **dadurch gekennzeichnet, dass** in dem Erfassungsschritt A während des Abtastens der gesamten Ebene der Probe (160) mit dem ersten Anregungslichtstrahl die eine oder die mehreren ersten Lochblenden (1255; 1255') in ihrer eigenen Ebene entlang mindestens einer von zwei Richtungen verschoben werden, die gegebenenfalls parallel zu zwei Seiten der Form der ersten Lochblenden (1255; 1255') sind, und während des Abtastens der gesamten Ebene der Probe (160) mit dem zweiten Anregungslichtstrahl das eine oder die mehreren zweiten Lochblenden (1265; 1265') in ihrer eigenen Ebene entlang mindestens einer von zwei Richtungen, die optional parallel zu zwei Seiten der Form der zweiten Lochblenden (1265; 1265'), verschoben werden.

6. Verfahren nach Anspruch 5, dieser abhängig von Anspruch 4, **dadurch gekennzeichnet, dass** die Form der einen oder mehreren ersten Lochblenden (1255; 1255') ein Quadrat mit Seitenlänge $L_1$ und die Form der einen oder mehreren zweiten Lochblenden (1265; 1265) ist ein Quadrat mit Seitenlänge $L_2$ ist, wobei das Verhältnis ($L_2$ / Li) zwischen den Seitenlängen der ersten und der zweiten Lochblende (1255, 1265; 1255', 1265') gleich 2 ist, wobei

$$(L_2/L_1) = 2\,,$$

wobei die eine oder die mehreren ersten Lochblenden (1255; 1255') eine Vielzahl erster Lochblenden (1255; 1255') sind, die in einem Array angeordnet sind und um einen Abstand $D_1$ voneinander beabstandet sind, der doppelt so groß wie die Seitenlänge $L_1$ ist, wobei

$$D_1 = 2 \cdot L_1\,,$$

wobei das eine oder die mehreren zweiten Lochblenden (1265; 1265') eine Vielzahl zweiter Lochblenden (1265; 1265') sind, die in einem Array angeordnet sind und um einen Abstand $D_2$ voneinander beabstandet sind, der doppelt so groß wie die Seitenlänge $L_2$ ist, wodurch

$$D_2 = 2 \cdot L_2 = 4 \cdot L_1\,,$$

wobei im Erfassungsschritt A während des Abtastens der gesamten Ebene der Probe (160) mit dem ersten Anregungslichtstrahl die mehreren ersten Lochblenden (1255; 1255') in der Ebene der ersten Lochblenden (1255; 1255') entlang mindestens einer von zwei orthogonalen Richtungen, die parallel zu den Seiten der ersten Lochblenden (1255; 1255') sind verschoben sind, und während des Abtastens der gesamten Ebene der Probe (160) mit dem zweiten Anregungslichtstrahl die ene Vielzahl von zweiten Lochblenden (1265; 1265') in der Ebene der zweiten Lochblenden (1265; 1265') entlang mindestens einer von zwei orthogonalen Richtungen, die parallel zu den Seiten der zweiten Lochblenden (1265; 1265') sind, verschoben ist.

**7.** Verfahren nach einem der vorhergehenden Ansprüche, **dadurch gekennzeichnet, dass** in dem Entfaltungsschritt C der Hauptentfaltungsalgorithmus eine Entfaltungsoperation oder ein iterativer Entfaltungsalgorithmus ist, der den Schätzwert *g* der PSF der Optik (155) des Mikroskops (100) als anfängliche Schätzung einer PSF nutzt.

**8.** Verfahren nach einem der vorhergehenden Ansprüche, **dadurch gekennzeichnet, dass** der Schritt B zum Berechnen der Schätzung *g* der PSF der Optik (155) des Mikroskops (100) die folgenden Unterschritte umfasst:

B.1 Berechnen der Fourier-Transformation durch eine schnelle Fourier-Transformation, FFT, des erfassten ersten Gesamtbildes $A_{k-1}$

$$\hat{A}_{k-1}(\omega) = FFT(A_{k-1})$$

B.2 Berechnen der Fourier-Transformation durch eine FFT des erfassten zweiten Gesamtbildes $A_k$:

$$\hat{A}_k(\omega) = FFT(A_k)$$

B.3 Berechnen der Fourier-Transformation $\hat{g}(\omega)$ der Schätzung *g* der PSF der Optik (155) des Mikroskops (100) auf der Grundlage der in den Unterschritten B.1 und B.2 erhaltenen FFT-Werte wie folgt:

$$\hat{g}(\omega) = \frac{\hat{A}_{k-1}^*(\omega)\hat{A}_k(\omega)}{\left|\hat{A}_{k-1}(\omega)\right|^2}$$

B.4 Berechnen des Schätzwerts *g* der PSF der Optik (155) des Mikroskops (100) durch eine inverse Fourier-Transformation, die durch eine inverse schnelle Fourier-Transformation, IFFT, der im Unterschritt B.3 berechneten Fourier-Transformation $\hat{g}(\omega)$ durchgeführt wird:

$$g = IFFT\big(\hat{g}(\omega)\big).$$

**9.** Verfahren nach einem der vorhergehenden Ansprüche, **dadurch gekennzeichnet, dass** der Erfassungsschritt A die folgenden Unterschritte umfasst:

A.1 Erfassen N erster Teilbilder $A_{k-1}^{(p)}{}'$ mit p im Bereich von 1 bis N, der Ebene der Probe (160) durch die eine oder die mehreren ersten Lochblenden (1255; 1255');

A.2 Addieren aller N ersten Teilbilder $A_{k-1}^{(p)}{}'$ um das erfasste erste Gesamtbild $A_{k-1}$ zu erhalten

$$A_{k-1} = \sum_{p=1}^{N} A_{k-1}^{(p)}$$

A.3 Erfassen von M zweiten Teilbildern $A_k^{(q)}{}'$ mit q im Bereich von 1 bis M, der Ebene der Probe (160) durch die eine oder die mehreren zweiten Lochblenden (1265; 1265');

A.4 Addieren aller M zweiten Teilbilder $A_k^{(q)}{}'$ um das erfasste zweite Gesamtbild $A_k$ zu erhalten:

$$A_k = \sum_{q=1}^{M} A_k^{(q)}.$$

10. Verfahren nach Anspruch 9, **dadurch gekennzeichnet, dass** der Erfassungsschritt A des Weiteren die folgenden zusätzlichen Unterschritte umfasst:

    - Nach Unterschritt A.1 und vor Unterschritt A.2

    A.5 Berechnen (600) einer Schätzung einer Größe $O_s$ x $O_s$ eines ersten Medianfilters $\Omega_s$, der durch den Sensor (170) angewendet wird, durch die folgende Formel:

$$O_s = \left\lceil \frac{\bar{p}R}{L_1} \right\rceil$$

    wobei der Operator $\lceil h \rceil$ eine Rundung auf das obere Ende von h liefert, und wobei

$$\bar{p} = argmin_{p \in \mathbb{N}}\{(pR - L_1) > 0\}$$

    wobei $\mathbb{N}$ die Menge der natürlichen Zahlen ist,

    A.6 Entfalten (610) jedes der N erfassten ersten Teilbilder $A_{k-1}^{(p)}$ unter Verwendung der Schätzung des ersten Medianfilters $\Omega_s$ der Größe $O_s$ x $O_s$, die in Unterschritt A.5 erhalten wurden, durch einen vorläufigen Entfaltungsalgorithmus, wobei das korrigierte Teilbild $A_{k-1\_corrected}^{(p)}$ erhalten wird:

$$A_{k-1\_corrected}^{(p)} = A_{k-1}^{(p)} \bullet \Omega_s$$

    und Ersetzen jedes erfassten ersten Teilbildes $A_{k-1}^{(p)}$ durch das entsprechende korrigiertes Teilbild $A_{k-1\_corrected}^{(p)}$ als Ergebnis der Entfaltung, wobei der Unterschritt A.2 alle N korrigierten ersten Teilbilder $A_{k-1\_corrected}^{(p)}$ addiert um das erfasste erste Gesamtbild $A_{k-1}$ wie folgt zu erhalten:

$$A_{k-1} = \sum_{p=1}^{N} A_{k-1\_corrected}^{(p)}$$

    - Nach Schritt A.3 und vor Schritt A.4

    A.7 Berechnen (620) einer Schätzung einer Größe $O_t$ x $O_t$ eines zweiten Medianfilters, der durch den Sensor (170) angewendet wird, durch die folgende Formel

$$O_t = \left\lceil \frac{\bar{q}R}{L_2} \right\rceil$$

    wobei

$$\bar{q} = argmin_{q\in\mathbb{N}}\{(qR - L_2) > 0\}$$

A8. Entfalten (630) von jedem der M erfassten zweiten Teilbilder $A_k^{(q)}$ unter Verwendung der Schätzung des zweiten Medianfilters $\Omega_t$ der Größe $O_t$ x $O_t$, die in Unterschritt A.7 erhalten wurde, durch den vorläufigen Entfaltungsalgorithmus, wobei das entsprechende korrigierte Teilbild $A_{k\_corrected}^{(q)}$ erhalten wird

$$A_{k_{corrected}}^{(q)} = A_k^{(q)} \bullet \Omega_t$$

und Ersetzen jedes erfassten zweiten Teilbildes $A_k^{(q)}$ durch das entsprechende korrigierte Teilbild $A_{k\_corrected}^{(q)}$, das sich aus der Entfaltung ergibt, wodurch Unterschritt A.4 alle M korrigierten zweiten Teilbilder $A_{k\_corrected}^{(q)}$ hinzufügt, um das erfasste zweite Gesamtbild $A_k$ wie folgt zu erhalten

$$A_k = \sum_{q=1}^{M} A_{k\_corrected}^{(q)} \ ,$$

wodurch der Schritt A einen faltenden Effekt einer Auflösung des Sensors (170) und der Größe der einen oder der mehreren ersten Lochblenden (1255; 1255') und der einen oder der mehreren zweiten Lochblenden (1265; 1265') kompensiert.

11. Verfahren nach Anspruch 10, **dadurch gekennzeichnet, dass** in dem Entfaltungsschritt C der vorläufige Entfaltungsalgorithmus eine Entfaltungsoperation oder ein iterativer Entfaltungsalgorithmus ist, der die Schätzung des ersten Medianfilters $\Omega_s$ verwendet, die in Unterschritt A.5 erhalten wird, oder die Schätzung des zweiten Medianfilter $\Omega_t$, die in Unterschritt A.7 erhalten wird, als anfängliche Schätzung eines solchen ersten oder zweiten Medianfilters $\Omega_s$ oder $\Omega_t$.

12. Konfokales Mikroskop (100), umfassend:

- eine Lichtquelle (110), die konfiguriert ist, um mit einem Grundlichtstrahl mindestens eine Maske (125) zu beleuchten, um einen Anregungslichtstrahl zu erhalten, wobei die Maske mit einem ersten Sektor (1250) versehen ist, der eine oder mehrere erste Lochblenden (1255; 1255') aufweist mit einer Form und einer ersten Größe ($L_1$; $L_{a1}$, $L_{b1}$), die konfiguriert ist, um einen ersten Anregungslichtstrahl zu erhalten, und mit einem zweiten Sektor (1260), der eine oder mehrere zweite Lochblenden (1265; 1265') aufweist, die eine Form haben gleich der Form der einen oder der mehreren ersten Lochblenden (1255; 1255') und einer zweiten Größe ($L_2$; $L_{a2}$, $L_{b2}$), die größer ist als die erste Größe ($L_1$; $L_{a1}$, $L_{b1}$), konfiguriert zum Erhalten eines zweiten Anregungslichtstrahls,
- Bewegungsmittel (130), die konfiguriert sind, um die mindestens eine Maske (125) auf einer Ebene der mindestens einen Maske (125) zu bewegen, die optisch mit einer Ebene einer Probe (160) konjugiert ist,
- eine Optik (155), die auf die Ebene der Probe (160) fokussiert ist,
- einen Bilderfassungssensor (170) mit einer eigenen Auflösung $R$ x $R$, **dadurch gekennzeichnet, dass** der Bilderfassungssensor (170) so konfiguriert ist, dass er einen von der Ebene der Probe (160) emittierten Fluoreszenzstrahl im Weitwinkel abtastet, und dass
- eine Zentraleinheit (180) konfiguriert ist, um den Betrieb des Konfokalmikroskops (100) zu steuern und um den Prozess des Erfassens und Verarbeitens von Bildern in der Konfokalmikroskopie nach einem der Ansprüche 1 bis 11 auszuführen.

13. Konfokalmikroskop (100) nach Anspruch 12, **dadurch gekennzeichnet, dass** die Form der einen oder mehreren ersten Lochblenden (1255; 1255') und der einen oder der mehreren zweiten Lochblenden (1265; 1265') ein Parallelogramm ist, wobei jede der einen oder mehreren ersten Lochblenden (1255; 1255') Seitenlängen $L_{a1}$ und $L_{b1}$ aufweist und jede der einen oder mehreren zweiten Lochblenden (1265; 1265') Seitenlängen $L_{a1}$ und $L_{b2}$ aufweist

und Dimensionsverhältnisse $(L_{a2}/L_{a1})$ und $(L_{b2}/L_{b1})$ zwischen einander entsprechenden Seiten gleich sind und größer als 1 sind, wobei

$$(L_{a2}/L_{a1}) = (L_{b2}/L_{b1}) > 1,$$

wobei

$$(L_{a2}/L_{a1}) = (L_{b2}/L_{b1}) = 2^n \text{ , mit } n > 1,$$

wobei

$$(L_{a2}/L_{a1}) = (L_{b2}/L_{b1}) = 2,$$

wobei die Bewegungsmittel (130) konfiguriert sind, um mindestens eine Maske (125) auf ihrer eigenen Ebene entlang mindestens einer von zwei Richtungen zu verschieben, die optional parallel zu zwei Seiten der Form der ersten Lochblenden (1255; 1255') sind, und / oder parallel zu zwei Seiten der Kontur der zweiten Lochblenden (1265; 1265') .

14. Konfokales Mikroskop (100) nach Anspruch 12 oder 13, **dadurch gekennzeichnet, dass** der erste Sektor (1250) und der zweite Sektor (1260) Teil einer einzigen Maske (125) sind, wobei:

- die Maske (125) rechteckig ist und die Bewegungsmittel (130) konfiguriert sind, um die Maske (125) so zu verschieben, dass ein zwischen dem ersten Sektor (1250) und dem zweiten Sektor (1260) ausgewählter Sektor in einer Position positioniert wird, in der er konfiguriert ist, um durch den Grundlichtstrahl beleuchtet zu werden, um einen Anregungslichtstrahl zu erzeugen, der zwischen dem ersten Anregungslichtstrahl und dem zweiten Anregungslichtstrahl ausgewählt ist, oder
- die Maske (125) kreisförmig ist und die Bewegungsmittel (130) konfiguriert sind, um die Maske (125) zu drehen um einen Sektor zu positionieren ausgewählt zwischen dem ersten Sektor (1250) und dem zweiten Sektor (1260), in einer Position, in der dieser konfiguriert ist, um durch den Grundlichtstrahl beleuchtet zu werden, um einen Anregungslichtstrahl zu erzeugen, der zwischen dem ersten Anregungslichtstrahl und dem zweiten Anregungslichtstrahl ausgewählt ist.

15. Konfokalmikroskop (100) nach einem der Ansprüche 12 bis 14, **dadurch gekennzeichnet, dass** es ferner eine Relaislinse (140) umfasst, die entlang eines optischen Pfads des ersten und des zweiten Anregungslichtstrahls positioniert ist und so konfiguriert ist, dass sie die Ebene der Probe (160) auswählt, die optisch mit der Ebene der mindestens einen Maske (125) konjugiert ist.

**Revendications**

1. Processus d'acquisition et de traitement d'images en microscopie confocale, comprenant l'étape suivante:

A. l'acquisition (500, 510 ; 520, 530), au moyen d'un capteur (170) d'acquisition d'images ayant sa propre résolution $R \times R$, d'une première image globale $A_{k-1}$ d'un plan entier d'un échantillon (160) balayant celui-ci avec un premier faisceau lumineux d'excitation, obtenu en faisant passer un faisceau lumineux de base à travers un ou plusieurs premiers trous d'épingle (1255 ; 1255') ayant une forme et une première taille ($L_1$ ; $L_{a1}$, $L_{b1}$) et transmis à une optique (155) d'un microscope confocal (100) qui est focalisé sur ledit plan de l'échantillon (160) et qui a une PSF, et l'acquisition d'une seconde image globale $\boldsymbol{A_k}$ du plan entier de l'échantillon (160) balayant celui-ci avec un second faisceau lumineux d'excitation, obtenu en faisant passer ledit faisceau lumineux de base à travers un ou plusieurs seconds trous d'épingle (1265 ; 1265') ayant une forme égale à la forme desdits un ou plusieurs premiers trous d'épingle (1255 ; 1255') et une seconde taille ($L_2$ ; $L_{a2}$, $L_{b2}$) plus grande que la première taille ($L_1$ ; $L_{a1}$, $L_{b1}$), dans lequel lesdits un ou plusieurs premiers trous d'épingle (1255 ; 1255') et lesdits un ou plusieurs seconds trous d'épingle (1265 ; 1265') sont disposés dans un plan optiquement conjugué audit plan de l'échantillon (160) ;

**caractérisé en ce que** le processus comprend les étapes supplémentaires suivantes :

B. le calcul (540) d'une estimation $g$ de la fonction d'étalement de point, PSF, de l'optique (155) du microscope (100), par l'intermédiaire d'une transformée de Fourier inverse de la transformée de Fourier $\hat{g}$ calculée comme suit :

$$\hat{g}(\omega) = \frac{\hat{A}_{k-1}^{*}(\omega)\hat{A}_k(\omega)}{\left|\hat{A}_{k-1}(\omega)\right|^2}$$

ou $\hat{A}_{k-1}(\omega)$ est la transformée de Fourier de la première image globale acquise $A_{k-1}$ et $\hat{A}_k(\omega)$ est la transformée de Fourier de la seconde image globale acquise $A_k$; et

C. la déconvolution (550) de la seconde image globale acquise $A_k$ à l'aide de l'estimation $g$ de la PSF de l'optique (155) du microscope (100) par l'intermédiaire d'un algorithme de déconvolution principal, permettant d'obtenir l'image résultante $I$ de l'ensemble du plan de l'échantillon (160) :

$$I = A_k \bullet g \, .$$

2. Processus selon la revendication 1, **caractérisé en ce que** l'étape d'acquisition A exécute une suppression des phénomènes de repliement dans la première image globale acquise $A_{k-1}$ et dans la seconde image globale acquise $A_k$.

3. Processus selon la revendication 1 ou 2, **caractérisé en ce que** la forme desdits un ou plusieurs premiers trous d'épingle (1255 ; 1255') et desdits un ou plusieurs seconds trous d'épingle (1265 ; 1265') est un parallélogramme, éventuellement un parallélogramme rectangulaire, dans lequel chacun desdits un ou plusieurs premiers trous d'épingle (1255 ; 1255') a des côtés $L_{a1}$ et $L_{b1}$, et chacun desdits un ou plusieurs seconds trous d'épingle (1265 ; 1265') a des côtés $L_{a2}$ et $L_{b2}$, les rapports dimensionnels $(L_{a2}/L_{a1})$ et $(L_{b2}/L_{b1})$ entre les côtés homologues étant identiques et supérieurs à 1, de sorte que

$$(L_{a2}/L_{a1}) \;=\; (L_{b2}/L_{b1}) \;>\; 1$$

éventuellement égal à une puissance de 2, de sorte que

$$(L_{a2}/L_{a1}) \;=\; (L_{b2}/L_{b1}) \;=\; 2^n, \; avec \; n > 1$$

plus éventuellement égal à 2, de sorte que

$$(L_{a2}/L_{a1}) \;=\; (L_{b2}/L_{b1}) \;=\; 2\,.$$

4. Processus selon la revendication 3, **caractérisé en ce que** lesdits un ou plusieurs premiers trous d'épingle (1255 ; 1255') sont au moins deux et lesdits un ou plusieurs seconds trous d'épingle (1265 ; 1265') sont au moins deux, et **en ce que** :

- au moins deux premiers trous d'épingle (1255 ; 1255') sont espacés l'un de l'autre le long d'une direction parallèle à un premier côté $L_{a1}$ d'une première distance $D_{a1}$ et au moins deux seconds trous d'épingle (1265 ; 1265') sont espacés l'un de l'autre le long d'une direction parallèle à un premier côté $L_{a2}$, homologue au premier côté $L_{a1}$ desdits premiers trous d'épingle (1255 ; 1255'), d'une deuxième distance $D_{a2}$, le rapport dimensionnel $(D_{a2}/D_{a1})$ entre les deuxième et première distances étant identique aux rapports dimensionnels $(L_{a2}/L_{a1})$ et $(L_{b2}/L_{b1})$ entre les côtés homologues, de sorte que

$$(D_{a2}/D_{a1}) \;=\; (L_{a2}/L_{a1}) \;=\; (L_{b2}/L_{b1}) \;>\; 1,$$

dans lequel la première distance $D_{a1}$ est éventuellement égale à un premier multiple entier j du premier côté

$L_{a1}$ desdits premiers trous d'épingle (1255 ; 1255'), de sorte que $D_{a1} = j \cdot L_{a1}$, avec j égal à un entier supérieur ou égal à 1, de sorte que la deuxième distance $D_{a2}$ est égale au premier multiple entier j du premier côté $L_{a2}$ desdits seconds trous d'épingle (1265 ; 1265'), c'est-à-dire $D_{a2} = j \cdot L_{a2}$, et/ou

- au moins deux premiers trous d'épingle (1255 ; 1255') sont espacés l'un de l'autre le long d'une direction parallèle à un second côté $L_{b1}$ d'une troisième distance $D_{b1}$ et au moins deux seconds trous d'épingle (1265 ; 1265') sont espacés l'un de l'autre le long d'une direction parallèle à un second côté $L_{b2}$, homologue au second côté $L_{b1}$ desdits premiers trous d'épingle (1255 ; 1255'), d'une quatrième distance $D_{b2}$, le rapport dimensionnel $(D_{b2}/D_{b1})$ entre les quatrième et troisième distances étant identique aux rapports dimensionnels $(L_{a2}/L_{a1})$ et $(L_{b2}/L_{b1})$ entre les côtés homologues, de sorte que

$$(D_{b2}/D_{b1}) \ = \ (L_{a2}/L_{a1}) \ = \ (L_{b2}/L_{b1}) \ > \ 1,$$

dans lequel la troisième distance $D_{b1}$ est éventuellement égale à un second multiple entier k du second côté $L_{b1}$ desdits premiers trous d'épingle (1255 ; 1255'), de sorte que $D_{b1} = k \cdot L_{b1}$, avec k égal à un entier supérieur ou égal à 1, de sorte que la quatrième distance $D_{b2}$ est égale au second multiple entier k du second côté $L_{b2}$ desdits seconds trous d'épingle (1265 ; 1265'), c'est-à-dire $D_{b2} = k \cdot L_{b2}$.

5. Processus selon l'une quelconque des revendications précédentes, **caractérisé en ce que**, lors de l'étape d'acquisition A, pendant le balayage de l'ensemble du plan de l'échantillon (160) avec le premier faisceau lumineux d'excitation, lesdits un ou plusieurs premiers trous d'épingle (1255 ; 1255') sont translatés dans leur propre plan le long d'au moins l'une des deux directions, qui sont éventuellement parallèles à deux côtés de la forme desdits premiers trous d'épingle (1255 ; 1255'), et, pendant le balayage du plan entier de l'échantillon (160) avec le second faisceau lumineux d'excitation, lesdits un ou plusieurs seconds trous d'épingle (1265 ; 1265') sont translatés dans leur propre plan le long d'au moins l'une des deux directions, qui sont éventuellement parallèles à deux côtés de la forme desdits seconds trous d'épingle (1265 ; 1265').

6. Processus selon la revendication 5, dépendant de la revendication 4, **caractérisé en ce que** la forme desdits un ou plusieurs premiers trous d'épingle (1255 ; 1255') est un carré du côté $L_1$ et la forme desdits un ou plusieurs seconds trous d'épingle (1265 ; 1265') est un carré du côté $L_2$, dans lequel le rapport dimensionnel $(L_2/L_1)$ entre les côtés des premiers et seconds trous d'épingle (1255, 1265 ; 1255', 1265') est égal à 2, de sorte que

$$(L_2/L_1) \ = \ 2,$$

lesdits un ou plusieurs premiers trous d'épingle (1255 ; 1255') étant une pluralité de premiers trous d'épingle (1255 ; 1255') agencés en un réseau et espacés les uns des autres d'une distance $D_1$ égale à deux fois leur côté $L_1$, de sorte que

$$D_1 \ = \ 2 \cdot L_1,$$

lesdits un ou plusieurs seconds trous d'épingle (1265 ; 1265') étant une pluralité de seconds trous d'épingle (1265 ; 1265') agencés en un réseau et espacés les uns des autres d'une distance $D_2$ égale à deux fois leur côté $L_2$, de sorte que

$$D_2 \ = \ 2 \cdot L_2 \ = \ 4 \cdot L_1,$$

dans lequel, dans l'étape d'acquisition A, pendant le balayage du plan entier de l'échantillon (160) avec le premier faisceau lumineux d'excitation, la pluralité de premiers trous d'épingle (1255 ; 1255') est translatée dans le plan desdits premiers trous d'épingle (1255 ; 1255') le long d'au moins l'une des deux directions orthogonales parallèles aux côtés desdits premiers trous d'épingle (1255 ; 1255'), et, pendant le balayage du plan entier de l'échantillon (160) avec le second faisceau lumineux d'excitation, la pluralité de seconds trous d'épingle (1265 ; 1265') est translatée dans le plan desdits seconds trous d'épingle (1265 ; 1265') le long d'au moins l'une des deux directions orthogonales parallèles aux côtés desdits seconds trous d'épingle (1265 ; 1265').

7. Processus selon l'une quelconque des revendications précédentes, **caractérisé en ce que**, dans l'étape de déconvolution C, l'algorithme de déconvolution principal est une opération de déconvolution ou un algorithme de déconvolution itératif utilisant l'estimation $g$ de la PSF de l'optique (155) du microscope (100) comme estimation initiale d'une telle PSF.

8. Processus selon l'une quelconque des revendications précédentes, **caractérisé en ce que** l'étape B de calcul de l'estimation $g$ de la PSF de l'optique (155) du microscope (100) comprend les sous-étapes suivantes :

    B.1 le calcul de la transformée de Fourier par l'intermédiaire d'une transformée de Fourier rapide, ou FFT, de la première image globale acquise $A_{k-1}$ :

$$\hat{A}_{k-1}(\omega) = FFT(A_{k-1})$$

    B.2 le calcul de la transformée de Fourier par l'intermédiaire d'une FFT de la seconde image globale acquise $A_k$ :

$$\hat{A}_k(\omega) = FFT(A_k)$$

    B.3 le calcul de la transformée de Fourier $\hat{g}(\omega)$ de l'estimation $g$ de la PSF de l'optique (155) du microscope (100) sur la base des valeurs de FFT obtenues aux sous-étapes B.1 et B.2, comme suit :

$$\hat{g}(\omega) = \frac{\hat{A}_{k-1}^{*}(\omega)\hat{A}_k(\omega)}{\left|\hat{A}_{k-1}(\omega)\right|^2}$$

    B.4 le calcul de l'estimation $g$ de la PSF de l'optique (155) du microscope (100) par l'intermédiaire d'une transformée de Fourier inverse réalisée par l'intermédiaire d'une transformée de Fourier rapide inverse, ou IFFT, de la transformée de Fourier $\hat{g}(\omega)$ calculée à la sous-étape B.3 :

$$g = IFFT(\hat{g}(\omega))$$

9. Processus selon l'une quelconque des revendications précédentes, **caractérisé en ce que** l'étape d'acquisition A comprend les sous-étapes suivantes :

    A.1 l'acquisition de N premières images partielles $A_{k-1}^{(p)}$, avec $p$ compris entre 1 et N, dudit plan de l'échantillon (160) à travers lesdits un ou plusieurs premiers trous d'épingle (1255 ; 1255') ;

    A.2 l'ajout de toutes les N premières images partielles $A_{k-1}^{(p)}$ pour obtenir la première image globale acquise $A_{k-1}$ :

$$A_{k-1} = \sum_{p=1}^{N} A_{k-1}^{(p)} \ ;$$

    A.3 l'acquisition de M secondes images partielles $A_k^{(q)}$, avec $q$ compris entre 1 et M, dudit plan de l'échantillon (160) à travers lesdits un ou plusieurs seconds trous d'épingle (1265 ; 1265') ;

    A.4 l'ajout de toutes les M secondes images partielles $A_k^{(q)}$ pour obtenir la seconde image globale acquise $A_k$ :

$$A_k = \sum_{q=1}^{M} A_k^{(q)}.$$

**10.** Processus selon la revendication 9, **caractérisé en ce que** l'étape d'acquisition A comprend en outre les sous-étapes supplémentaires suivantes :

- après la sous-étape A.1 et avant la sous-étape A.2 :

A.5 le calcul (600) d'une estimation d'une taille $O_s$ x $O_s$ d'un premier filtre médian $\Omega_s$ appliqué par le capteur (170) par l'intermédiaire de la formule suivante :

$$O_s = \left\lceil \frac{\bar{p}R}{L_1} \right\rceil$$

dans lequel l'opérateur $\lceil h \rceil$ renvoie l'arrondi jusqu'à l'extrémité supérieure de $h$, et dans lequel

$$\bar{p} = argmin_{p \in \mathbb{N}}\{(pR - L_1) > 0\}$$

où $\mathbb{N}$ est l'ensemble des nombres naturels ;

A.6 la déconvolution (610) de chacune des N premières images partielles acquises $A_{k-1}^{(p)}$ à l'aide de l'estimation du premier filtre médian $\Omega_s$ de taille $O_s$ x $O_s$ obtenue à la sous-étape A.5, par l'intermédiaire d'un algorithme de déconvolution préliminaire, permettant d'obtenir l'image partielle corrigée correspondante $A_{k-1\_corrected}^{(p)}$ :

$$A_{k-1\_corrected}^{(p)} = A_{k-1}^{(p)} \bullet \Omega_s$$

et le remplacement de chaque première image partielle acquise $A_{k-1}^{(p)}$ par l'image partielle corrigée correspondante $A_{k-1\_corrected}^{(p)}$ résultant de la déconvolution, de sorte que la sous-étape A.2 ajoute toutes les N premières images partielles corrigées $A_{k-1\_corrected}^{(p)}$ pour obtenir la première image globale acquise $A_{k-1}$, comme suit :

$$A_{k-1} = \sum_{p=1}^{N} A_{k-1\_corrected}^{(p)} \; ;$$

- après la sous-étape A.3 et avant la sous-étape A.4 :

A.7 le calcul (620) d'une estimation d'une taille $O_t$ x $O_t$ d'un second filtre médian $\Omega_t$ appliqué par le capteur (170) par l'intermédiaire de la formule suivante :

$$O_t = \left\lceil \frac{\bar{q}R}{L_2} \right\rceil$$

dans lequel

$$\bar{q} = argmin_{q \in \mathbb{N}} \{(qR - L_2) > 0\} \, ;$$

A.8 la déconvolution (630) de chacune des M secondes images partielles acquises $A_k^{(q)}$ à l'aide de l'estimation du second filtre médian $\Omega_t$ de taille $O_t \times O_t$ obtenue à la sous-étape A.7, par l'intermédiaire de l'algorithme préliminaire de déconvolution permettant d'obtenir l'image partielle corrigée correspondante $A_{k\_corrected}^{(q)}$ :

$$A_{k\_corrected}^{(q)} = A_k^{(q)} \bullet \Omega_t$$

et le remplacement de chaque seconde image partielle acquise $A_k^{(q)}$ par l'image partielle corrigée correspondante $A_{k\_corrected}^{(q)}$ résultant de la déconvolution, de sorte que la sous-étape A.4 ajoute toutes les M secondes images partielles corrigées $A_{k\_corrected}^{(q)}$ pour obtenir la seconde image globale acquise $A_k$, comme suit :

$$A_k = \sum_{q=1}^{M} A_{k\_corrected}^{(q)} \, ,$$

de sorte que l'étape A compense un effet de convolution d'une résolution du capteur (170) et de la taille desdits un ou plusieurs premiers trous d'épingle (1255 ; 1255') et desdits un ou plusieurs seconds trous d'épingle (1265 ; 1265').

**11.** Processus selon la revendication 10, **caractérisé en ce que**, dans l'étape de déconvolution C, l'algorithme de déconvolution préliminaire est une opération de déconvolution ou un algorithme de déconvolution itératif utilisant l'estimation du premier filtre médian $\Omega_s$ obtenu à la sous-étape A.5 ou l'estimation du second filtre médian $\Omega_t$ obtenu à la sous-étape A.7 comme estimation initiale de ce premier ou second filtre médian $\Omega_s$ ou $\Omega_t$.

**12.** Microscope confocal (100), comprenant :

- une source lumineuse (110) configurée pour éclairer, avec un faisceau lumineux de base, au moins un masque (125) pour obtenir un faisceau lumineux d'excitation, le masque étant pourvu d'un premier secteur (1250), ayant un ou plusieurs premiers trous d'épingle (1255 ; 1255') ayant une forme et une première taille ($L_1$ ; $L_{a1}$, $L_{b1}$), configuré pour obtenir un premier faisceau lumineux d'excitation, et d'un second secteur (1260), ayant un ou plusieurs seconds trous d'épingle (1265 ; 1265') ayant une forme égale à la forme desdits un ou plusieurs premiers trous d'épingle (1255 ; 1255') et une seconde taille ($L_2$ ; $L_{a2}$, $L_{b2}$) plus grande que la première taille ($L_1$ ; $L_{a1}$, $L_{b1}$) , configuré pour obtenir un second faisceau lumineux d'excitation,
- un moyen de déplacement (130) configuré pour déplacer ledit au moins un masque (125) sur un plan dudit au moins un masque (125) qui est conjugué optiquement à un plan d'un échantillon (160),
- une optique (155) focalisée sur ledit plan de l'échantillon (160),
- un capteur d'acquisition d'images (170), ayant sa propre résolution $RxR$, **caractérisé en ce que** le capteur d'acquisition d'images (170) est configuré pour détecter en champ large un faisceau fluorescent émis par ledit plan de l'échantillon (160), et **en ce que**
- une unité centrale de traitement (180) est configurée pour commander le fonctionnement du microscope confocal (100) et exécuter le processus d'acquisition et de traitement d'images en microscopie confocale selon l'une quelconque des revendications 1 à 11.

**13.** Microscope confocal (100) selon la revendication 12, **caractérisé en ce que** la forme desdits un ou plusieurs premiers trous d'épingle (1255 ; 1255') et desdits un ou plusieurs seconds trous d'épingle (1265 ; 1265') est un parallélogramme,

dans lequel chacun desdits un ou plusieurs premiers trous d'épingle (1255 ; 1255') a des côtés $L_{a1}$ et $L_{b1}$ et chacun desdits un ou plusieurs seconds trous d'épingle (1265 ; 1265') a des côtés $L_{a2}$ et $L_{b2}$, les rapports dimensionnels $(L_{a2}/L_{a1})$ et $(L_{b2}/L_{b1})$ entre les côtés homologues étant identiques et supérieurs à 1, de sorte que

$$(L_{a2}/L_{a1}) = (L_{b2}/L_{b1}) > 1,$$

de sorte que

$$(L_{a2}/L_{a1}) = (L_{b2}/L_{b1}) = 2^n, \text{ avec } n > 1$$

de sorte que

$$(L_{a2}/L_{a1}) = (L_{b2}/L_{b1}) = 2,$$

dans lequel ledit moyen de déplacement (130) est configuré pour translater ledit au moins un masque (125) sur son propre plan le long d'au moins l'une des deux directions, qui sont éventuellement parallèles à deux côtés de la forme desdits premiers trous d'épingle (1255 ; 1255') et/ou parallèles à deux côtés de la forme desdits seconds trous d'épingle (1265 ; 1265').

**14.** Microscope confocal (100) selon la revendication 12 ou 13, **caractérisé en ce que** le premier secteur (1250) et le second secteur (1260) font partie d'un seul masque (125), dans lequel :

- le masque (125) est rectangulaire et ledit moyen de déplacement (130) est configuré pour translater le masque (125) de manière à positionner un secteur sélectionné entre le premier secteur (1250) et le second secteur (1260) dans une position dans laquelle il est configuré pour être éclairé par le faisceau lumineux de base de manière à produire un faisceau lumineux d'excitation sélectionné entre le premier faisceau lumineux d'excitation et le second faisceau lumineux d'excitation, ou

- le masque (125) est circulaire et ledit moyen de déplacement (130) est configuré pour faire tourner le masque (125) de manière à positionner un secteur sélectionné entre le premier secteur (1250) et le second secteur (1260) dans une position dans laquelle il est configuré pour être éclairé par le faisceau lumineux de base de manière à produire un faisceau lumineux d'excitation sélectionné entre le premier faisceau lumineux d'excitation et le second faisceau lumineux d'excitation.

**15.** Microscope confocal (100) selon l'une quelconque des revendications 12 à 14, **caractérisé en ce qu'**il comprend en outre une lentille relais (140), positionnée le long d'un trajet optique du premier et du second faisceau lumineux d'excitation et configuré pour sélectionner ledit plan de l'échantillon (160) qui est optiquement conjugué audit plan dudit au moins un masque (125) .

*Fig. 1*

*Fig. 2*

*Fig. 3*

Fig. 4

500 — $A_{K-1}^{(p)}$

$A_K^{(q)}$ — 520

510 — $A_{K-1} = \sum\limits_{p=1}^{N} A_{K-1}^{(p)}$

$A_K = \sum\limits_{q=1}^{M} A_K^{(q)}$ — 530

$g = IFFT\left( \dfrac{\hat{A}_{K-1} \; \hat{A}_K}{|\hat{A}_{K-1}|^2} \right)$ — 540

$I = A_K \bullet g$ — 550

$I$ — 560

*Fig. 5*

500 — $A_{K-1}^{(p)}$

520 — $A_{K}^{(q)}$

600 — $O_s = \left\lceil \dfrac{\bar{p}R}{L_1} \right\rceil$

620 — $O_t = \left\lceil \dfrac{\bar{q}R}{L_2} \right\rceil$

$A_{K-1\_corrected}^{(p)} = A_{K-1}^{(p)} \cdot \Omega_s$

610

$A_{K\_corrected}^{(q)} = A_{K}^{(q)} \cdot \Omega_t$

630

$A_{K-1} = \sum\limits_{p=1}^{N} A_{K-1\_corrected}^{(p)}$

510

$A_{K} = \sum\limits_{q=1}^{M} A_{K\_corrected}^{(q)}$

530

540 — $g$

550 — $I = A_K \cdot g$

560 — $I$

*Fig. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3013467 A
- US 20020146784 A1
- US 20050146784 A1
- EP 2520965 A1
- US 20050146784 A

**Non-patent literature cited in the description**

- **S.W. HELL et al.** Breaking the diffraction resolution limit by stimulated emission: Stimulated-emission-depletion fluorescence microscopy. *Optics Letters,* 1994, vol. 19 (11), 780-782
- **E. BETZIG et al.** Imaging intracellular fluorescent proteins at nanometer resolution. *Science,* 2006, vol. 313 (5793), 1642-1645
- **M.J. RUST et al.** Sub-diffraction-limit imaging by stochastic optical reconstruction microscopy (STORM). *Nature Methods,* 2006, vol. 3 (10), 793-795
- **M.G.L. GUSTAFSSON et al.** I5M: 3D widefield light microscopy with better than 100 nm axial resolution. *J. Microsc.,* 1999, vol. 195, 10-16
- **M.G.L. GUSTAFSSON.** Surpassing the lateral resolution limit by a factor of two using structured illumination microscopy. *J. Microsc.,* 2000, vol. 198, 82-87
- **C.B. MÜLLER et al.** Image scanning microscopy. *Phys. Rev. Lett.,* 2010, vol. 104 (19), 198101
- **A.G. YORK et al.** Resolution doubling in live, multicellular organisms via multifocal structured illumination microscopy. *Nature Methods,* 2012, vol. 9 (7), 749-754
- **GUSTAFSSON.** *Surpassing the lateral resolution limit by a factor of two using structured illumination microscopy*
- **T. SHIMOZAWA et al.** Improving spinning disk confocal microscopy by preventing pinhole cross-talk for intravital imaging. *Proceedings of the National Academy of Sciences of the United States of America,* 2013, vol. 110 (9), 3399-3404
- **N.A. HOSNY et al.** Correction: Super-Resolution Imaging Strategies for Cell Biologists Using a Spinning Disk Microscope. *PLoS ONE,* 2013, vol. 8 (12
- **OLAF SCHULZ et al.** Resolution doubling in fluorescence microscopy with confocal spinning-disk image scanning microscopy. *Proceedings of the National Academy of Sciences of the United States of America,* 2013, vol. 110 (52), 21000-21005
- **C.J.R. SHEPPARD.** Super-resolution in confocal imaging. *Optik (Stuttgart),* 1988, vol. 80 (2), 53-54

- High resolution optical confocal microscopy. **O. HOLLRICHER et al.** Confocal Raman Microscopy. Springer-Verlag, 2011
- **Y. WANG et al.** Image subtraction method for improving lateral resolution and SNR in confocal microscopy. *Optics and Laser Technology,* 2013, vol. 48, 489-494
- **R. HEINTZMANN et al.** Resolution enhancement by subtraction of confocal signals taken at different pinhole sizes. *Micron,* 2003, vol. 34, 293-300
- **C. KUANG et al.** Breaking the diffraction barrier using fluorescence emission difference microscopy. *Scientific Reports,* 2013, vol. 3, 1441
- **M. MARTINEZ-CORRAL et al.** Optical sectioning by two-pinhole confocal fluorescence microscopy. *Micron,* 2003, vol. 34, 313-318
- **T. WILSON et al.** Size of the detector in confocal imaging systems. *Optics letters,* April 1987, vol. 12 (4
- **T. WILSON et al.** Effect of detector displacement in confocal imaging systems. *Applied Optics,* September 1988, vol. 27 (18
- **R.H. WEBB.** Confocal optical microscopy. *Reports on Progress in Physics,* 1996, vol. 59 (3), 427-471
- **T. WILSON.** Resolution and optical sectioning in the confocal microscope. *Journal of Microscopy,* 2011, vol. 244
- **G.R. AYERS et al.** Iterative Blind Deconvolution Method and Its applications. *Optics Letters,* 1988, vol. 13 (7), 547-549
- **N. NAKAJIMA.** Blind deconvolution using the maximum likelihood estimation and the iterative algorithm. *Optics Communications,* July 1993, vol. 100 (1-4), 59-66
- **D. KUNDUR et al.** Blind Image Deconvolution Revisited. *IEEE Magazine on Signal Processing,* 1996, vol. 13 (6), 61-63
- **D.A. FISH.** Blind Deconvolution by Means of the Richardson-Lucy Algorithm. *Journal of the Optical Society of America A,* 1995, vol. 12 (1), 58-65

- **D.S.C. BIGGS et al.** Acceleration of Iterative Image Restoration Algorithms. *Applied Optics,* 1997, vol. 36 (8), 1766-1775
- **M. JIANG et al.** Development of Blind Image Deconvolution and Its Applications. *Journal of X-ray Science and Ology,* 2003, vol. 11, 13-19
- **H.Y. LIU et al.** Study on the Methods of Super Resolution Image Reconstruction. *The International Archives of the Photognanmetry, Remote Sensing and Spatial Information Science,* 2008, vol. XXVII
- **D. KUNDUR et al.** Blind Image Deconvolution. *IEEE Magazine on Signal Processing,* 1996, vol. 13 (3), 43-64